# EUROPEAN PATENT APPLICATION

(11) **EP 4 826 464 A1**
(43) Date of publication of application: **21.10.2026**
(21) Application number: 24917341.0
(22) Date of filing: 27.12.2024
(51) Int. Cl.: G03H 1/04, G06T 7/55, G06N 3/08

(54) **ELECTRONIC DEVICE FOR DISPLAYING HOLOGRAM CONTENT, AND OPERATING METHOD OF ELECTRONIC DEVICE**

(30) Priority: 12.01.2024 KR 20240005675
(71) Applicant: Samsung Electronics Co., Ltd., Suwon-si, Gyeonggi-do 16677 (KR)
(72) Inventor: MOON, Seokil, Suwon-si, Gyeonggi-do 16677 (KR); KIM, Yunhee, Suwon-si, Gyeonggi-do 16677 (KR); LEE, Changkun, Suwon-si, Gyeonggi-do 16677 (KR)
(74) Representative: Gulde & Partner
(86) International application number: PCT/KR2024/021252
(87) International publication number: WO 2025/150747

(57) **Abstract**

In an electronic device for displaying hologram content, and an operating method, the electronic device comprises: a spatial light modulator for displaying a plurality of phase modulation images; an optical layer for receiving the plurality of hologram images reproduced by the spatial light modulator; a memory; and at least one processor, wherein the at least one processor can: acquire a plurality of view images each corresponding to a plurality of views; generate a plurality of hologram images by using depth information about the plurality of view images; calculate a plurality of diffraction angles for diffracting each of the plurality of holographic images from the optical layer toward each of the plurality of views; generate a plurality of phase delay patterns corresponding to the plurality of diffraction angles; and generate a plurality of phase modulation images by multiplying the plurality of holographic images and the plurality of phase delay patterns corresponding to each of the plurality of holographic images.

## Description

### Technical Field

The present disclosure relates to an electronic device and an operating method of the electronic device. Specifically, the present disclosure relates to an electronic device for displaying hologram content and an operating method of the electronic device.

### Background Art

With the development of electronic device technology, various electronic devices that provide content such as videos or images to users have been developed and distributed.

In addition, with the development of optical technology, electronic devices in the form of projectors that provide content to users by projecting images onto screens or specific spaces have also been developed and distributed.

With the development of electronic devices, types of images displayed on electronic devices have also been diversified. Electronic devices capable of displaying not only two-dimensional (2D) images but also three-dimensional (3D) images have been developed.

Recently, in order to display 3D images, electronic devices that provide images including binocular disparity to users have been developed, allowing the users to feel a 3D effect through vergence operations of the left and right eyes of the users.

### Disclosure of Invention

### Solution to Problem

An embodiment of the present disclosure provides an electronic device for displaying hologram content. The electronic device may include a spatial light modulator (SLM) configured to display a plurality of phase-modulated images. The electronic device may include an optical layer configured to receive a plurality of hologram images reproduced in the SLM. The electronic device may include memory in which at least one instruction is stored. The electronic device may include at least one processor including a processing circuit. The at least one processor may individually or collectively execute the at least one instruction stored in the memory to cause the electronic device to obtain a plurality of view images respectively corresponding to a plurality of views. The electronic device may generate the plurality of hologram images by using depth information for the obtained plurality of view images. The electronic device may calculate a plurality of diffraction angles for diffracting each of the generated plurality of hologram images from the optical layer toward each of the plurality of views. The electronic device may generate a plurality of phase delay patterns corresponding to the calculated plurality of diffraction angles. The electronic device may generate a plurality of phase-modulated images by multiplying the plurality of hologram images by the plurality of phase delay patterns respectively corresponding to the plurality of hologram images.

An embodiment of the present disclosure may provide an operating method of an electronic device for displaying hologram content. The operating method of the electronic device may include obtaining a plurality of view images respectively corresponding to a plurality of views. The operating method of the electronic device may include generating a plurality of hologram images by using depth information for the obtained plurality of view images. The operating method of the electronic device may include calculating a plurality of diffraction angles for diffracting each of the plurality of hologram images from an optical layer, which receives the plurality of hologram images reproduced in a spatial light modulator (SLM), toward each of the plurality of views. The operating method of the electronic device may include generating a plurality of phase delay patterns corresponding to the calculated plurality of diffraction angles. The operating method of the electronic device may include generating a plurality of phase-modulated images by multiplying the plurality of hologram images by the plurality of phase delay patterns respectively corresponding to the plurality of hologram images. The operating method of the electronic device may include displaying the generated plurality of phase-modulated images through the SLM.

In an embodiment of the present disclosure, a computer-readable recording medium having recorded thereon a program for performing the operating method of the electronic device on a computer may be provided.

Technological objectives of the present disclosure are not limited to those mentioned above, and other unmentioned technological objectives will be clearly understood by one of ordinary skill in the art to which the present disclosure belongs from the description below.

### Brief Description of Drawings

The present disclosure may be understood from the following detailed description in conjunction with the accompanying drawings, in which reference numerals denote structural elements.
FIG. 1 is a diagram for describing an operation of an electronic device according to an embodiment of the present disclosure.
FIG. 2 is a block diagram for describing a configuration of an electronic device according to an embodiment of the present disclosure.
FIG. 3 is a flowchart for describing an operation of an electronic device according to an embodiment of the present disclosure.
FIG. 4 is a flowchart for describing an operation of calculating a content position for displaying hologram content, according to an embodiment of the present disclosure.
FIG. 5 is a diagram for describing a configuration of an electronic device according to an embodiment of the present disclosure.
FIG. 6 is a diagram for describing an operation of displaying a plurality of phase-modulated images through a spatial light modulator (SLM), according to an embodiment of the present disclosure.
FIG. 7 is a flowchart for describing an operation of generating a final modulated image, according to an embodiment of the present disclosure.
FIG. 8 is a diagram for describing an operation of calculating a plurality of diffraction angles and a content position, according to an embodiment of the present disclosure.
FIG. 9 is a flowchart for describing an operation of calculating a content position of hologram content, according to an embodiment of the present disclosure.
FIG. 10 is a diagram for describing a phase delay pattern according to an embodiment of the present disclosure.
FIG. 11 is a flowchart for describing an operation of generating a plurality of phase-modulated images by using a modulated image generation module, according to an embodiment of the present disclosure.
FIG. 12 is a block diagram for describing an operation of generating a plurality of phase-modulated images by using a modulated image generation module, according to an embodiment of the present disclosure.
FIG. 13 is a block diagram for describing an operation of training an artificial intelligence (AI) model included in a modulated image generation module, according to an embodiment of the present disclosure.
FIG. 14A is a diagram for describing an operation of displaying pieces of hologram content having two or more different depth values, according to an embodiment of the present disclosure.
FIG. 14B is a diagram for describing an operation of displaying pieces of hologram content having continuous depth values, according to an embodiment of the present disclosure.
FIG. 15 is a diagram for describing an operation of displaying hologram content by using an SLM including a plurality of sub-SLMs, according to an embodiment of the present disclosure.
FIG. 16 is a block diagram for describing an operation of displaying hologram content by providing different pieces of sub-hologram content to two eyes of a user, according to an embodiment of the present disclosure.

### Mode for the Invention

The terms used herein will be briefly described, and an embodiment of the present disclosure will be described in detail.

The terms used herein are general terms currently widely used in the art in consideration of functions in an embodiment of the present disclosure, but the terms may vary according to the intention of one of ordinary skill in the art, precedents, or new technology in the art. Also, some terms may be arbitrarily selected by the applicant, and in this case, the meaning of the selected terms will be described in detail in the detailed description of an embodiment of the present disclosure. Therefore, the terms used in the present disclosure should be defined based on the meaning of the terms and the whole context of the present disclosure, rather than simple names of the terms.

The singular forms "a," "an," and "the" are intended to include the plural forms as well, unless the context clearly indicates otherwise. The terms used herein, including technical or scientific terms, may have the same meanings as those generally understood by one of ordinary skill in the art described in the present disclosure.

In the present disclosure, when a portion "includes" an element, another element may be further included, rather than excluding the existence of the other element, unless otherwise described. Also, the terms such as "... unit" or "module" refer to units that perform at least one function or operation, and the units may be implemented as hardware or software or as a combination of hardware and software.

According to the situation, the expression "configured to" used herein may be used as, for example, the expression "suitable for", "having the capacity to", "designed to", "adapted to", "made to", or "capable of". The term "configured to" does not always mean only "specifically designed to" in hardware. Instead, the expression "a system configured to" may mean that the system is "capable of" operating together with another device or other parts. For example, "a processor configured to perform A, B, and C" may be a dedicated processor (e.g., an embedded processor) for performing a corresponding operation or a generic-purpose processor (such as a central processing unit (CPU) or an application processor) that may perform a corresponding operation by executing at least one software program stored in a memory.

Also, in the present disclosure, it will be understood that when elements are "connected" or "coupled" to each other, the elements may be directly connected or coupled to each other, but may alternatively be connected or coupled to each other with an intervening element therebetween, unless specified otherwise.

An embodiment of the present disclosure will now be described more fully with reference to the accompanying drawings for one of ordinary skill in the art to be able to perform the embodiment of the present disclosure without any difficulty. However, an embodiment of the present disclosure may be implemented in many different forms and is not limited to the embodiment described herein. Also, in the drawings, parts irrelevant to the description are omitted in order to clearly describe an embodiment of the present disclosure, and like reference numerals denote like elements throughout the present disclosure.

Hereinafter, embodiments of the present disclosure will be described in detail with reference to the drawings.

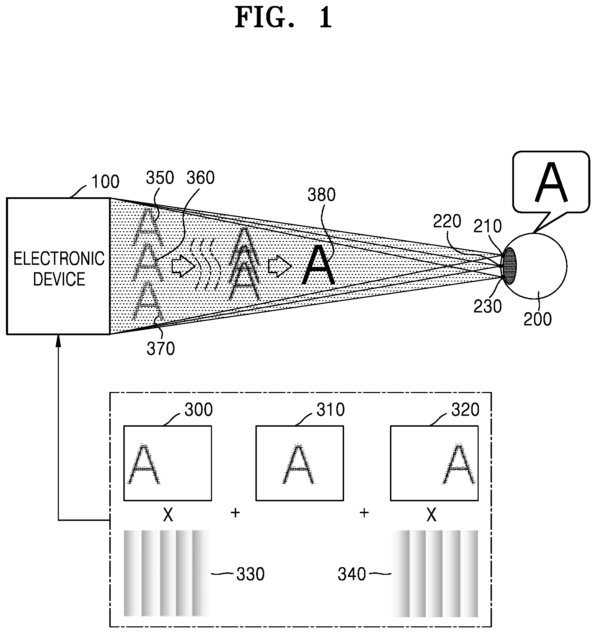

FIG. 1 is a diagram for describing an operation of an electronic device according to an embodiment of the present disclosure.

Referring to FIG. 1, in an embodiment of the present disclosure, an electronic device 100 may provide content 380 to a user. Specifically, the content 380 may be provided such that the user sees different sides of an object included in the content 380 according to a position of the user looking at the electronic device 100. In an embodiment of the present disclosure, the content 380 may be an image capable of providing a three-dimensional (3D) effect to the user using the electronic device 100.

In an embodiment of the present disclosure, the electronic device 100 may obtain a plurality of view images respectively corresponding to a plurality of different views. In this case, a "view" may correspond to a position where the user may see a different side of the object included in the content 380 provided through the electronic device 100.

In an embodiment of the present disclosure, the plurality of view images may be images obtained by capturing a real object in the plurality of different views. However, the present disclosure is not limited thereto, and the plurality of view images may be images generated to provide images of the object in the plurality of different views.

In an embodiment of the present disclosure, the electronic device 100 may provide different content 380 to each of a left eye and a right eye of the user. The electronic device 100 may generate the content 380 to be provided to each of the left eye and the right eye of the user by using the plurality of view images. The content 380 provided by the electronic device 100 to each of the left eye and the right eye of the user may include binocular disparity.

The term "binocular disparity" may refer to a difference between a position of a specific region of the object included in content provided to the left eye and a position of the specific region of the object included in content provided to the right eye. As a depth value of the specific region of the object is smaller, binocular disparity of the corresponding region may be larger.

The user may feel a 3D effect of the content 380 provided to the user through vergence and accommodation operations of the left eye and the right eye. In this case, the 3D effect of the content 380 may include depth information such as a depth value of the content 380.

In an embodiment of the present disclosure, the vergence operation of the left eye and the right eye of the user may be performed according to a magnitude of the binocular disparity included in the content 380 provided to each of the left eye and the right eye. In an embodiment of the present disclosure, in order to focus on the electronic device 100 on which the content 380 is displayed, the accommodation operation of the left eye and right eye of the user may be performed.

In this case, as shown in FIG. 1, the depth value based on the depth information of the content 380 including the binocular disparity may be different from a depth value of the electronic device 100 that displays the content 380.

Accordingly, when the user views the electronic device 100 that provides the content 380, a 3D effect of the content 380 felt through the vergence operation and a 3D effect of the content 380 felt through the accommodation operation may be different from each other. The user may feel dizziness or fatigue due to the vergence-accommodation conflict (VAC).

In an embodiment of the present disclosure, the electronic device 100 may provide a plurality of generated images 350, 360, and 370 respectively corresponding to a plurality of views 210, 220, and 230 to each of the left eye and the right eye of the user. The content 380 provided to the user may be an image provided by the plurality of generated images 350, 360, and 370 provided by the electronic device 100.

In an embodiment of the present disclosure, each of the plurality of views 210, 220, and 230 may be a view spaced apart by a distance equal to or less than a diameter of a pupil of each eyeball 200. The generated images 350, 360, and 370 provided by the electronic device 100 to each of the left eye and the right eye of the user may be images provided by using a plurality of view images generated by using images obtained by capturing a real object in the plurality of views 210, 220, and 230.

The "content 380" may be an image provided to the user when the generated images 350, 360, and 370 coincide with each other and are formed as one image.

A point at which two or more generated images 350, 360, and 370 coincide with each other and are formed as one image may be referred to as a "content position".

In order to focus on the content 380 in which the two or more generated images 350, 360, and 370 provided to each of the left eye and the right eye on the content 380 are formed as one image at the content position, the accommodation operation of the left eye and the right eye of the user may be performed.

The 3D effect of the content 380 felt by the user through the accommodation operation may be the same as the 3D effect of the content 380 felt by the user through the vergence operation. Through this, the electronic device 100 may prevent the user from feeling dizziness or fatigue due to the VAC.

For convenience of description, the following will be described assuming that the electronic device 100 of the present disclosure provides the content 380 to the eyeball 200 of any one of the left eye and the right eye of the user. In addition, the following will be described assuming that the plurality of view images obtained by the electronic device 100 are images obtained by capturing a real object through two or more cameras spaced apart by an interval equal to an interval between two or more views 210, 220, and 230 spaced apart by a distance equal to or less than the diameter of the pupil of each eyeball.

In an embodiment of the present disclosure, the electronic device 100 may include a spatial light modulator (SLM), an optical layer, and a light source. The electronic device 100 may generate a plurality of hologram images 300, 310, and 320.

In an embodiment of the present disclosure, the plurality of hologram images 300, 310, and 320 may be images generated such that each of the plurality of view images is formed as one image at the content position and provided to the eyeball 200 of the user. The plurality of hologram images 300, 310, and 320 may be images generated by performing inversion-optical propagation on each of the plurality of view images by a distance between the electronic device 100 and the content position.

In an embodiment of the present disclosure, the electronic device 100 may generate a plurality of phase delay patterns 330 and 340. Each of the plurality of phase delay patterns 330 and 340 may be a pattern for delaying a phase of light provided to the SLM. The light provided to the SLM may be modulated by the plurality of phase delay patterns 330 and 340 and diffracted and propagated in different directions from the SLM.

"A plurality of diffraction angles" may be angles for diffracting the plurality of hologram images 300, 310, and 320 such that the plurality of hologram images 300, 310, and 320 reproduced from the SLM 112 are directed toward the plurality of views 210, 220, and 230, respectively.

Each of "the plurality of phase delay patterns 330 and 340" may be a pattern for modulating a phase of light such that the light provided to the SLM is refracted and propagated by the plurality of diffraction angles.

In an embodiment of the present disclosure, the electronic device 100 may generate a plurality of phase-modulated images by multiplying each of the plurality of hologram images 300, 310, and 320 corresponding to the plurality of views 210, 220, and 230 by the plurality of phase delay patterns 330 and 340.

In an embodiment of the present disclosure, the electronic device 100 may control the SLM to display the plurality of phase-modulated images. In an embodiment of the present disclosure, the electronic device 100 may control the SLM to display a final modulated image generated by adding all of the plurality of phase-modulated images.

In an embodiment of the present disclosure, the electronic device 100 may provide light to the SLM through the light source. The light source may be a light source that generates coherent light. The electronic device 100 may provide the coherent light to the SLM through the coherent light source.

In an embodiment of the present disclosure, through the final modulated image displayed on the SLM, the plurality of hologram images 300, 310, and 320 refracted by the plurality of diffraction angles may be reproduced as the plurality of generated images 350, 360, and 370 by the coherent light.

The plurality of generated images 350, 360, and 370 may be images reproduced by the coherent light provided to the SLM from the plurality of phase-modulated images displayed on the SLM. The plurality of generated images 350, 360, and 370 may be images reproduced by the coherent light from the final modulated image displayed on the SLM. In this case, the plurality of generated images 350, 360, and 370 may be images reproduced by diffracting each of the plurality of hologram images according to a corresponding diffraction angle among the plurality of diffraction angles.

In an embodiment of the present disclosure, the plurality of generated images 350, 360, and 370 reproduced in the SLM may be provided to the eyeball 200 of the user through the optical layer. In an embodiment of the present disclosure, the plurality of generated images 350, 360, and 370 reproduced through the electronic device 100 may be optically propagated and provided toward the two or more views 210, 220, and 230 included in the pupil of the eyeball 200.

In this case, although FIG. 1 illustrates that three views are included in the pupil and the electronic device 100 provides three generated images 350, 360, and 370 toward the three views, the present disclosure is not limited thereto. In an embodiment of the present disclosure, the electronic device 100 may provide corresponding generated images toward two views or four or more views included in the pupil.

In an embodiment of the present disclosure, the plurality of generated images 350, 360, and 370 may be propagated toward the eyeball 200 and formed as one image at the content position. In this case, the accommodation operation of the eyeball 200 may be performed to focus on the content 380 where the plurality of generated images 350, 360, and 370 are formed as one image at the content position.

The content 380 formed at the content position by the plurality of generated images 350, 360, and 370 may be referred to as "hologram content 380".

In an embodiment of the present disclosure, the electronic device 100 may provide the plurality of generated images 350, 360, and 370 to the left eye or the right eye by displaying the final modulated image on one SLM.

The electronic device 100 of the present disclosure may provide the plurality of generated images 350, 360, and 370 to the eyeball 200 by using one SLM in order to change a position of a focus where the accommodation operation of the eyeball 200 is performed.

Through this, the electronic device 100 of the present disclosure may prevent the user from feeling dizziness or fatigue due to the VAC. In addition, compared to using a plurality of electronic devices for respectively providing the plurality of generated images 350, 360, and 370, cost reduction and space utilization may be improved.

In this case, when the plurality of generated images 350, 360, and 370 are optically propagated and are formed as the hologram content 380 at the content position, sharpness of the hologram content 380 formed at the content position may be lowered through a process in which each of the plurality of generated images 350, 360, and 370 is optically propagated.

Also, when the plurality of generated images 350, 360, and 370 are formed as the hologram content 380 at the content position, an interference pattern may be included in the hologram content 380 due to constructive interference and destructive interference of each of the plurality of generated images 350, 360, and 370.

The electronic device 100 of the present disclosure may generate the plurality of phase-modulated images, by using an artificial intelligence (AI) model trained to generate the plurality of phase-modulated images such that the hologram content 380 provided at the content position has high sharpness and does not include an interference pattern.

Through this, the electronic device 100 may provide the hologram content 380 such that the eyeball 200 is focused at the content position through the plurality of generated images 350, 360, and 370. In addition, the electronic device 100 may provide the hologram content 380 having high sharpness and not including an interference pattern.

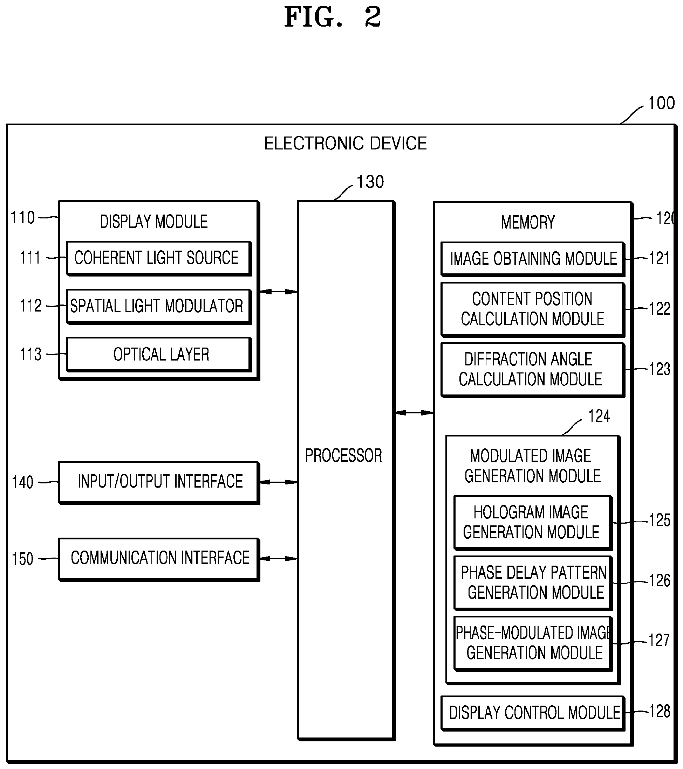

The electronic device 100 may be any of various types of electronic devices that provide the hologram content 380 to the user. The electronic device 100 may be implemented as any of various types and forms of electronic devices including a display module 110 (see FIG. 2).

In an embodiment of the present disclosure, the electronic device 100 may be a projector that provides the hologram content 380 to the user by projecting the hologram content 380 onto a space including the electronic device 100. The electronic device 100 may be a fixed projector fixed at a specific location in the space or a mobile projector that may be disposed at a desired location in the space.

However, the present disclosure is not limited thereto. The electronic device 100 may be implemented as any of various types and forms of electronic devices such as a mobile device, a smartphone, a laptop computer, a tablet PC, a desktop PC, a wearable device, a head-mounted display (HMD), a television, or the like.

Effects obtainable in the present disclosure are not limited to the above effects, and other effects not mentioned may be clearly understood by one of ordinary skill in the art to which the present disclosure pertains from the present disclosure.

FIG. 2 is a block diagram for describing a configuration of an electronic device according to an embodiment of the present disclosure.

Referring to FIGS. 1 and 2, in an embodiment of the present disclosure, the electronic device 100 may include the display module 110, a memory 120, at least one processor 130, an input/output interface 140, and a communication interface 150.

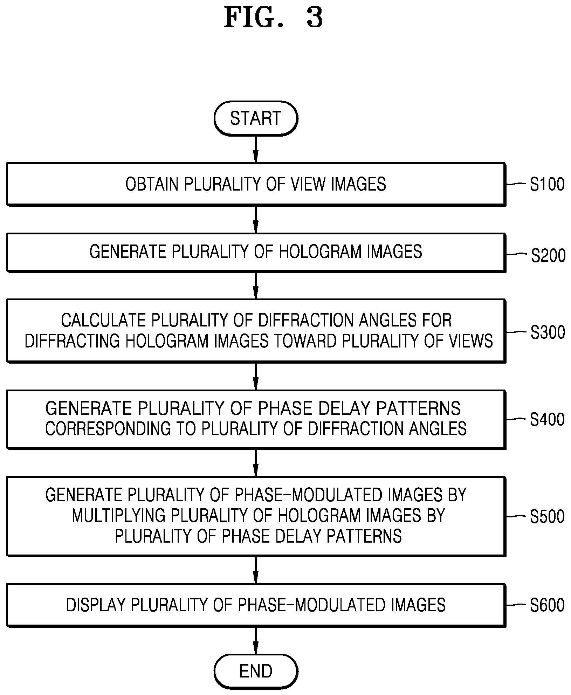

However, not all of the components shown in FIG. 3 are essential components. The electronic device 100 may be implemented by more components than the components illustrated in FIG. 2. In addition, the electronic device 100 may be implemented by fewer components than the components illustrated in FIG. 2.

The display module 110, the memory 120, the at least one processor 130, the input/output interface 140, and the communication interface 150 included in the electronic device 100 may be electrically and/or physically connected to each other.

In an embodiment of the present disclosure, the display module 110 may include a coherent light source 111, a spatial light modulator (SLM) 112, and an optical layer 113.

In an embodiment of the present disclosure, the coherent light source 111 may refer to a light source that provides light having a single wavelength and maintaining a constant phase. The coherent light source 111 may include a laser. In an embodiment of the present disclosure, the coherent light source 111 may provide coherent light to the SLM 112.

In an embodiment of the present disclosure, the SLM 112 may be a device used to control a spatial distribution of light in a 3D space. The SLM 112 may be a device that modulates at least one of a phase or an amplitude of light provided to the SLM 112.

In an embodiment of the present disclosure, the light provided to the SLM 112 may be transmitted through the SLM 112 such that at least one of the phase or the amplitude is modulated. In addition, the light provided to the SLM 112 may be reflected by the SLM 112 such that at least one of the phase or the amplitude is modulated.

In an embodiment of the present disclosure, the SLM 112 may include a liquid crystal layer including liquid crystals (LCs). The SLM 112 may modulate at least one of the phase or the amplitude of the provided light through anisotropy of the LCs by adjusting an arrangement direction of the LCs included in the liquid crystal layer.

In an embodiment of the present disclosure, a computer-generated Hologram (CGH) may be displayed on the SLM 112.

The "CGH" may be a hologram image generated by numerically simulating propagation of light.

The CGH may be a hologram image calculated by simulating an interference pattern between reference light and object light obtained by reflecting the reference light provided to an object. In the present disclosure, the plurality of hologram images 300, 310, and 320 may be CGHs.

In an embodiment of the present disclosure, displaying the CGH through the SLM 112 may mean changing an arrangement of the LCs included in the liquid crystal layer by applying a voltage corresponding to data of the CGH to the liquid crystal layer included in the SLM 112.

In an embodiment of the present disclosure, the optical layer 113 may receive the plurality of hologram images 300, 310, and 320 reproduced from the SLM 112. The plurality of hologram images 300, 310, and 320 reproduced from the SLM 112 may be the plurality of generated images 350, 360, and 370. The plurality of generated images 350, 360, and 370 passing through the optical layer 113 may be refracted to be directed into the pupil of the eyeball 200.

In an embodiment of the present disclosure, the optical layer 113 may include a lens. The optical layer 113 may include two or more lenses. However, the present disclosure is not limited thereto, and the optical layer 113 may include a configuration for refracting or diffracting the plurality of generated images 350, 360, and 370 so that the plurality of generated images 350, 360, and 370 reproduced from the SLM 112 are directed into the pupil of the eyeball 200.

Although the coherent light source 111, the SLM 112, and the optical layer 113 are included in the display module 110 in FIG. 2, the present disclosure is not limited thereto. The coherent light source 111, the SLM 112, and the optical layer 113 may be included in the electronic device 100 as separate components.

In an embodiment of the present disclosure, instructions, data structures, and program code readable by the at least one processor 130 may be stored in the memory 120. Operations performed by the at least one processor 130 may be implemented by executing the instructions or the program code stored in the memory 120. In an embodiment of the present disclosure, there may be one or more memories 120.

In an embodiment of the present disclosure, the memory 120 may include at least one of a flash memory type, a hard disk type, a multimedia card micro type, a card-type memory (e.g., SD or XD memory), a random-access memory (RAM), a static random-access memory (SRAM), a read-only memory (ROM), an electrically erasable programmable read-only memory (EEPROM), a programmable read-only memory (PROM), a mask ROM, a flash ROM, a hard disk drive (HDD), or a solid-state drive (SSD).

In an embodiment of the present disclosure, instructions or program code for performing functions or operations of the electronic device 100 may be stored in the memory 120. Instructions, algorithms, data structures, program code, and application programs stored in the memory 120 may be implemented in a programming or scripting language such as C, C++, Java, or assembler.

In an embodiment of the present disclosure, various types of modules that may be used to generate a plurality of phase-modulated images may be stored in the memory 120. The memory 120 may store an image obtaining module 121, a content position calculation module 122, a diffraction angle calculation module 123, a modulated image generation module 124, and a display control module 128. However, not all of modules illustrated in FIG. 2 are essential modules. More or fewer elements than those illustrated in FIG. 2 may be stored in the memory 120.

In an embodiment of the present disclosure, a 'module' included in the memory 120 may refer to a unit that processes a function or an operation performed by the at least one processor 130. A 'module' included in the memory 120 may be implemented as software such as instructions, algorithms, data structures, or program code.

In an embodiment of the present disclosure, the image obtaining module 121 may include instructions or program code related to an operation or function of obtaining a plurality of view images. The image obtaining module 121 may include instructions or program code related to an operation or function of receiving a plurality of view images from an external server or surrounding electronic devices.

The at least one processor 130 may obtain a plurality of view images from the external server or surrounding electronic devices by executing the instructions or program code of the image obtaining module 121.

However, the present disclosure is not limited thereto. The image obtaining module 121 may include instructions or program code for generating a plurality of view images. The image obtaining module 121 may include instructions or program code for generating a plurality of view images from at least one view image corresponding to at least one obtained view by using an interpolation algorithm.

In addition, the image obtaining module 121 may include a generative AI model such as a generative adversarial network (GAN), a variational auto encoder (VAE), or a transformer for generating a plurality of view images.

The at least one processor 130 may obtain a plurality of view images generated by executing the instructions or program code of the image obtaining module 121.

In an embodiment of the present disclosure, the content position calculation module 122 may include instructions or program code for calculating a content position for displaying the hologram content 380.

In an embodiment of the present disclosure, the plurality of view images obtained through the image obtaining module 121 may include a header and a body. The header may include metadata information of the plurality of view images. The header may include information such as positions of a plurality of cameras that have captured the plurality of view images, distances between an object included in the plurality of view images and the plurality of cameras, and the number of the plurality of cameras.

In this case, the positions of the plurality of cameras may correspond to positions of a plurality of views. The distance between the object included in the plurality of view images and the plurality of cameras may correspond to depth information of the object included in the plurality of view images.

In an embodiment of the present disclosure, captured images obtained through the plurality of cameras may be included in the body.

The content position calculation module 122 may include instructions or program code for obtaining depth information for the plurality of view images by using the information on the distance between the object and the plurality of cameras included in the header of the plurality of view images. In this case, the depth information may include a depth value of the object included in the plurality of view images.

However, the present disclosure is not limited thereto, and the content position calculation module 122 may include instructions or program code for calculating the depth value of the object included in the plurality of view images by using a distance between adjacent views and the binocular disparity included in adjacent view images based on the obtained plurality of view images.

In an embodiment of the present disclosure, the content position calculation module 122 may calculate a content position by comparing a preset maximum depth value with the depth value of the object. The content position calculation module 122 may calculate a content position by comparing a preset minimum depth value with the depth value of the object.

The at least one processor 130 may calculate a content position by executing the instructions or program code of the content position calculation module 122.

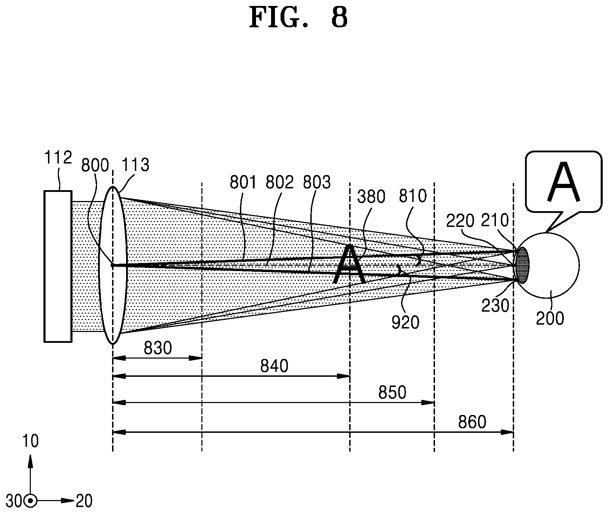

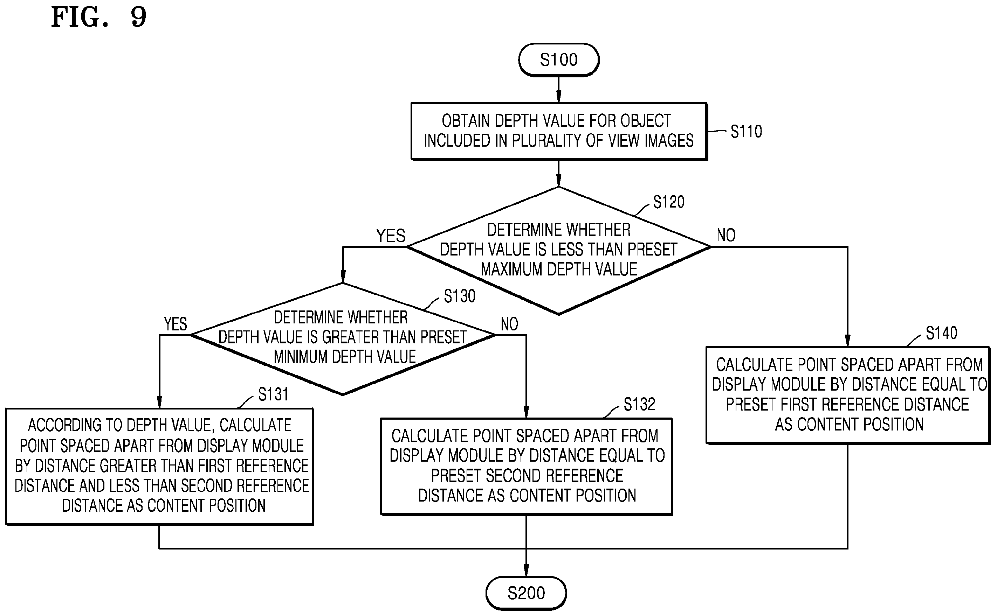

Hereinafter, an operation of calculating the content position will be described later with reference to FIGS. 8 and 9.

In an embodiment of the present disclosure, the diffraction angle calculation module 123 may include instructions or program code for calculating a plurality of diffraction angles. The diffraction angle calculation module 123 may include instructions or program code for calculating a plurality of diffraction angles by using the positions of the plurality of cameras included in the obtained plurality of view images and the center of the lens included in the optical layer 113.

The at least one processor 130 may calculate a plurality of diffraction angles by executing the instructions or program code of the diffraction angle calculation module 123.

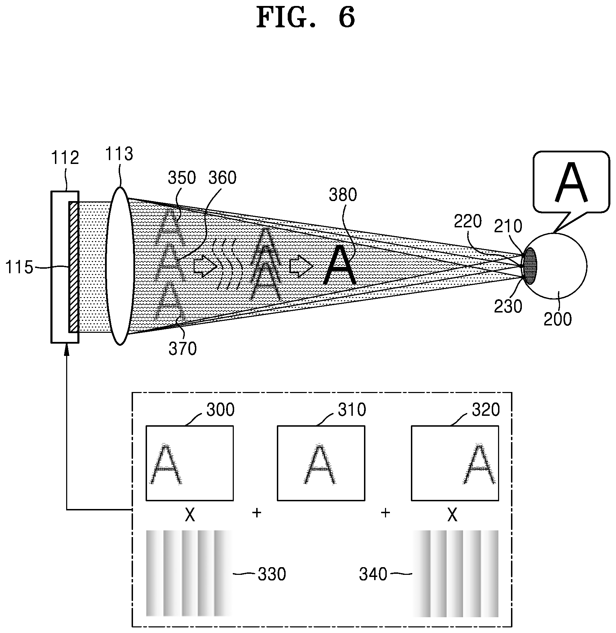

Hereinafter, a plurality of diffraction angles and an operation of calculating the plurality of diffraction angles will be described later with reference to FIGS. 6 to 9.

In an embodiment of the present disclosure, the modulated image generation module 124 may include instructions or program code for generating a plurality of phase-modulated images by using the plurality of view images, the content position, and the plurality of diffraction angles. The modulated image generation module 124 may include instructions or program code for generating a final modulated image by adding the generated plurality of phase-modulated images.

The at least one processor 130 may generate a plurality of phase-modulated images by using the plurality of view images, the content position, and the plurality of diffraction angles by executing the instructions or program code of the modulated image generation module 124. The at least one processor 130 may generate a final modulated image by adding the generated plurality of phase-modulated images by executing the instructions or program code of the modulated image generation module 124.

In an embodiment of the present disclosure, the modulated image generation module 124 may include a hologram image generation module 125, a phase delay pattern generation module 126, and a phase-modulated image generation module 127.

In an embodiment of the present disclosure, the hologram image generation module 125 may include instructions or program code for generating a plurality of hologram images by using the plurality of view images and the calculated content position. The hologram image generation module 125 may include instructions or program code for generating a plurality of hologram images by performing inversion-optical propagation on the plurality of view images by a distance from the electronic device 100 to the content position. The hologram image generation module 125 may include instructions or program code for generating a plurality of hologram images by performing inversion-optical propagation on the plurality of view images by a distance from the optical layer 113 to the content position.

The at least one processor 130 may generate a plurality of hologram images by executing the instructions or program code of the hologram image generation module 125.

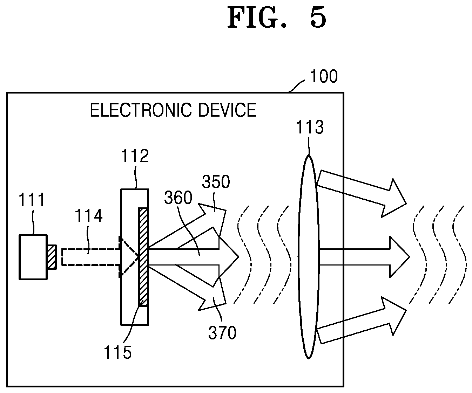

Hereinafter, an operation of generating a plurality of hologram images will be described later with reference to FIGS. 5 to 7.

In an embodiment of the present disclosure, the phase delay pattern generation module 126 may include instructions or program code for generating a plurality of phase delay patterns based on the plurality of diffraction angles.

In an embodiment of the present disclosure, the plurality of phase delay patterns may be patterns for modulating phases of the plurality of hologram images 300, 310, and 320 reproduced in the SLM 112 by using anisotropy of the LCs included in the SLM 112.

The plurality of phase delay patterns may be patterns corresponding to the plurality of diffraction angles, respectively. The plurality of phase delay patterns may be patterns for modulating phases of the plurality of hologram images 300, 310, and 320 reproduced in the SLM 112 by the plurality of diffraction angles.

The at least one processor 130 may generate a plurality of phase delay patterns by executing the instructions or program code of the phase delay pattern generation module 126.

Hereinafter, a plurality of phase delay patterns and an operation of generating the plurality of phase delay patterns will be described later with reference to FIGS. 5 to 10.

In an embodiment of the present disclosure, the phase-modulated image generation module 127 may include instructions or program code for generating a plurality of phase-modulated images by multiplying the plurality of hologram images by the plurality of phase delay patterns. The phase-modulated image generation module 127 may generate a plurality of phase-modulated images by multiplying the plurality of hologram images respectively corresponding to the plurality of views by the plurality of phase delay patterns respectively corresponding to the plurality of diffraction angles toward the plurality of views.

The at least one processor 130 may generate a plurality of phase-modulated images by executing the instructions or program code of the phase-modulated image generation module 127.

In an embodiment of the present disclosure, the phase-modulated image generation module 127 may include instructions or program code for generating a final modulated image by adding all of the plurality of phase-modulated images.

The at least one processor 130 may generate a final modulated image by adding all of the plurality of phase-modulated images by executing the instructions or program code of the phase-modulated image generation module 127.

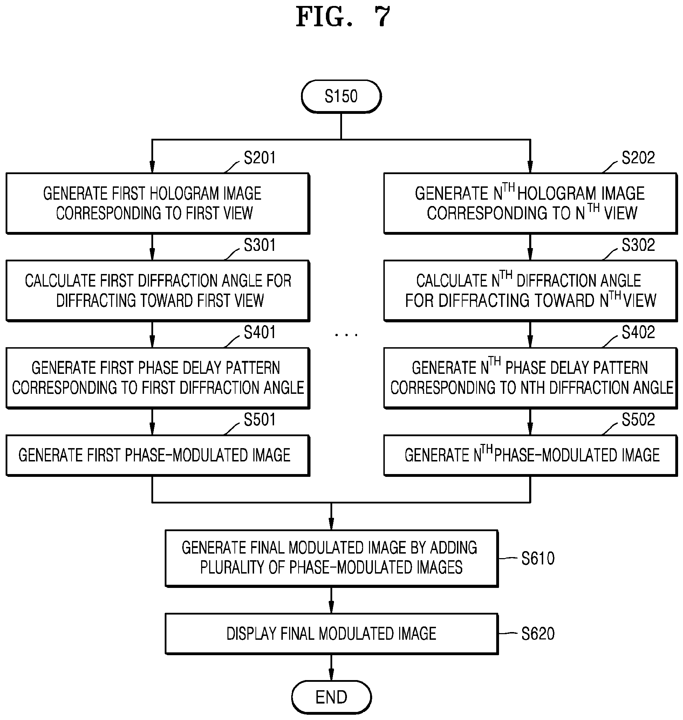

Hereinafter, an operation of the phase-modulated image generation module 127 will be described later with reference to FIGS. 6 and 7.

In an embodiment of the present disclosure, the modulated image generation module 124 may include an AI model trained to receive the plurality of view images, the content position, and the plurality of diffraction angles as inputs and infer the plurality of phase-modulated images.

In an embodiment of the present disclosure, the AI model trained to infer the plurality of phase-modulated images includes a convolutional neural network (CNN), a U-net, a deep neural network (DNN), a recurrent neural network (RNN), a generative adversarial network (GAN), a conditional generative adversarial network (CGAN), a deep convolutional generative adversarial network (DCGAN), a variational auto encoder (VAE), a diffusion model, and the like, and the AI model in the present disclosure is not limited to the above-described examples.

The at least one processor 130 may generate a plurality of phase-modulated images by providing the plurality of view images, the content position, and the plurality of diffraction angles as inputs to the AI model included in the modulated image generation module 124.

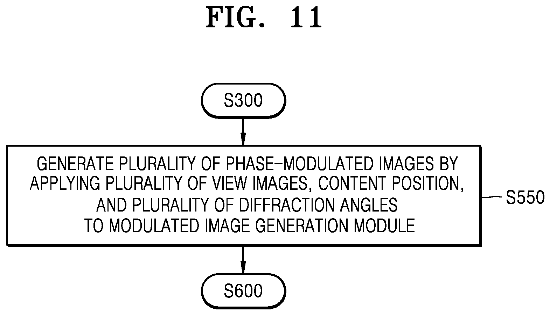

Hereinafter, the AI model included in the modulated image generation module 124 and a training method of the AI model will be described later with reference to FIGS. 11 to 13.

In an embodiment of the present disclosure, the at least one processor 130 may include at least one of, but not limited to, a central processing unit, a microprocessor, a graphics processing unit, an application processor (AP), an application-specific integrated circuit (ASIC), a digital signal processor (DSP), a digital signal processing device (DSPD), a programmable logic device (PLD), a field-programmable gate array (FPGA), a neural processing unit, or a dedicated artificial intelligence (AI) processor designed in a hardware structure specialized for training and processing an AI model.

In an embodiment of the present disclosure, the at least one processor 130 may include processing circuitry such as a system on chip (SoC) or an integrated circuit (IC).

In an embodiment of the present disclosure, the at least one processor 130 may execute various types of modules stored in the memory 120. The at least one processor 130 may execute at least one instruction constituting the various types of modules stored in the memory 120.

In an embodiment of the present disclosure, the at least one processor 130 may execute at least one of the image obtaining module 121, the content position calculation module 122, the diffraction angle calculation module 123, the modulated image generation module 124, and the display control module 128 stored in the memory 120. The at least one processor 130 may also execute the hologram image generation module 125, the phase delay pattern generation module 126, and the phase-modulated image generation module 127 included in the modulated image generation module 124.

In an embodiment of the present disclosure, the at least one processor 130 may include a plurality of processors.

At least one of the image obtaining module 121, the content position calculation module 122, the diffraction angle calculation module 123, the modulated image generation module 124, or the display control module 128 stored in the memory 120 may be executed by any one of the plurality of processors. The remaining modules among the image obtaining module 121, the content position calculation module 122, the diffraction angle calculation module 123, the modulated image generation module 124, or the display control module 128 stored in the memory 120 may be executed by another processor among the plurality of processors.

At least one of the hologram image generation module 125, the phase delay pattern generation module 126, or the phase-modulated image generation module 127 included in the modulated image generation module 124 may be executed by any one of the plurality of processors. The remaining modules among the hologram image generation module 125, the phase delay pattern generation module 126, or the phase-modulated image generation module 127 included in the modulated image generation module 124 may be executed by another processor among the plurality of processors.

In an embodiment of the present disclosure, the input/output interface 140 may receive at least one of image data or audio data from an external electronic device or the like under the control of the at least one processor 130. The at least one processor 130 may obtain the plurality of view images from the external electronic device through the input/output interface 140.

In an embodiment of the present disclosure, the input/output interface 140 may perform an input/output operation with the external electronic device by using at least one of input/output methods including a high-definition multimedia interface (HDMI) port, a digital visual interface (DVI), a component jack, a PC port, or a universal serial bus (USB) port However, the present disclosure is not limited to the input/output methods.

In an embodiment of the present disclosure, the communication interface 150 may perform data communication with the external server or the external electronic device under the control of the at least one processor 130. The communication interface 150 may perform data communication with the external server or the external electronic devices by using at least one of data communication methods including, for example, wired local area network (LAN), wireless LAN, Wi-Fi, Bluetooth, Zigbee, Wi-Fi Direct (WFD), infrared data association (IrDA), Bluetooth low energy (BLE), near-field communication (NFC), wireless broadband Internet (Wibro), world interoperability for microwave access (WiMAX), shared wireless access protocol (SWAP), wireless gigabit alliance (WiGig), and radio frequency (RF) communication.

In an embodiment of the present disclosure, the at least one processor 130 may receive the plurality of view images from the external server or the external electronic device through the communication interface 150. The at least one processor 130 may receive information on a first reference distance and a second reference distance, which are preset, from the external server or the external electronic device through the communication interface 150.

In an embodiment of the present disclosure, the at least one processor 130 may also receive a modulated image generation module that is trained or a parameter of the modulated image generation module from the external server or the external electronic device through the communication interface 150.

FIG. 3 is a flowchart for describing an operation of an electronic device according to an embodiment of the present disclosure.

Referring to FIGS. 1, 2, and 3, in an embodiment of the present disclosure, an operating method of the electronic device 100 may include obtaining a plurality of view images respectively corresponding to the plurality of views 210, 220, and 230 (S100).

In the obtaining of the plurality of view images (S100), at least one processor 130 may obtain the plurality of view images through the input/output interface 140 or the communication interface 150 by executing instructions or program code of the image obtaining module 121.

In an embodiment of the present disclosure, the operating method of the electronic device 100 may include generating the plurality of hologram images 300, 310, and 320 by using depth information for the obtained plurality of view images (S200).

In the generating of the plurality of hologram images 300, 310, and 320 (S200), the at least one processor 130 may generate the plurality of hologram images 300, 310, and 320 by using the depth information for the plurality of view images by executing instructions or program code of the hologram image generation module 125.

The at least one processor 130 may generate the plurality of hologram images 300, 310, and 320 by performing inversion-optical propagation on each of the obtained plurality of view images by using a calculated content position.

In an embodiment of the present disclosure, the at least one processor 130 may generate the plurality of hologram images 300, 310, and 320 from the plurality of view images by using an optical wave propagation model according to a distance.

Hereinafter, the generating of the plurality of hologram images 300, 310, and 320 (S200) will be described later with reference to FIGS. 5 and 6.

In an embodiment of the present disclosure, the operating method of the electronic device 100 may include calculating a plurality of diffraction angles for diffracting each of the generated plurality of hologram images 300, 310, and 320 from the display module 110 toward each of the plurality of views 210, 220, and 230 (S300).

The calculating of the plurality of diffraction angles (S300) may be a step of calculating the plurality of diffraction angles for diffracting the plurality of hologram images 300, 310, and 320 such that the plurality of generated images 350, 360, and 370 from the optical layer 113 receiving the plurality of generated images 350, 360, and 370 reproduced by the SLM 112 are directed toward the plurality of views 210, 220, and 230, respectively.

In this case, the plurality of generated images 350, 360, and 370 may be images in which the plurality of hologram images 300, 310, and 320 are reproduced by the SLM 112.

In the calculating of the plurality of diffraction angles (S300), the at least one processor 130 may calculate the plurality of diffraction angles for diffracting the generated plurality of hologram images 300, 310, and 320 from the display module 110 toward the plurality of views 210, 220, and 230 respectively by executing instructions or program code of the diffraction angle calculation module 123. The at least one processor 130 may calculate the plurality of diffraction angles for diffracting the generated plurality of hologram images 300, 310, and 320 from the optical layer 113 toward the plurality of views 210, 220, and 230 by executing instructions or program code of the diffraction angle calculation module 123.

In an embodiment of the present disclosure, in the calculating of the plurality of diffraction angles (S300), angles formed between an optical axis of a lens included in the optical axis 113 and a plurality of lines each passing through the center of the lens and each of the plurality of views 210, 220, and 230 may be calculated as the plurality of diffraction angles.

The at least one processor 130 may calculate angles formed between the optical axis of the lens included in the optical axis 113 and the plurality of lines each passing through the center of the lens and each of the plurality of views 210, 220, and 230 as the plurality of diffraction angles by executing instructions or program code of the diffraction angle calculation module 123.

Hereinafter, the calculating of the plurality of diffraction angles (S300) will be described later with reference to FIG. 8.

In an embodiment of the present disclosure, the operating method of the electronic device 100 may include generating the plurality of phase delay patterns 330 and 340 corresponding to the plurality of diffraction angles (S400).

In the generating of the plurality of phase delay patterns 330 and 340 (S400), the at least one processor 130 may generate the plurality of phase delay patterns 330 and 340 corresponding to the plurality of diffraction angles by executing instructions or program code of the phase delay pattern generation module 126.

In an embodiment, each of the plurality of phase delay patterns 330 and 340 may include a plurality of grating patterns having the same period. In the generating of the plurality of phase delay patterns 330 and 340 (S400), the plurality of phase delay patterns 330 and 340 including the plurality of grating patterns having the same period may be generated. In this case, the period of each of the plurality of grating patterns may be determined corresponding to each of the plurality of diffraction angles.

In an embodiment of the present disclosure, the operating method of the electronic device 100 may include generating a plurality of phase-modulated images by multiplying the plurality of hologram images 300, 310, and 320 by the plurality of phase delay patterns 330 and 340 respectively corresponding to the plurality of hologram images 300, 310, and 320 (S500).

In the generating of the plurality of phase-modulated images (S500), the at least one processor 130 may generate the plurality of phase-modulated images by multiplying the plurality of hologram images 300, 310, and 320 by the plurality of phase delay patterns 330 and 340 respectively corresponding to the plurality of hologram images 300, 310, and 320 by executing instructions or program code of the phase-modulated image generation module 127.

In an embodiment of the present disclosure, the operating method of the electronic device 100 may include displaying the generated plurality of phase-modulated images through the display module 110 (S600).

In the displaying of the plurality of phase-modulated images (S600), the at least one processor 130 may control the display module 110 to display the plurality of phase-modulated images by executing instructions or program code of the display control module 128.

In an embodiment of the present disclosure, the displaying of the plurality of phase-modulated images (S600) may be a step of displaying the generated plurality of phase-modulated images through the SLM 112. The at least one processor 130 may control the SLM 112 to display the plurality of phase-modulated images.

In an embodiment of the present disclosure, the operating method of the electronic device 100 may include providing coherent light to the SLM 112 through the coherent light source 111. The at least one processor 130 may control the coherent light source 111 to provide coherent light to the SLM 112 on which the plurality of phase-modulated images are displayed.

In an embodiment of the present disclosure, FIG. 3 illustrates that the operating method of the electronic device 100 is divided into a plurality of steps that are sequentially performed. However, the present disclosure is not limited thereto, and in the operating method of the electronic device 100, two or more operations may be performed in one step. In addition, in the operating method of the electronic device 100, two or more operations may be performed in parallel.

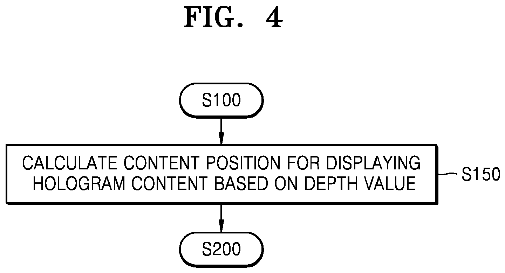

FIG. 4 is a flowchart for describing an operation of calculating a content position for displaying hologram content according to an embodiment of the present disclosure. Hereinafter, the same reference numerals are assigned to the same steps as those described with reference to FIG. 3, and redundant descriptions will be omitted.

Referring to FIGS. 2, 3, and 4, in an embodiment of the present disclosure, the operating method of the electronic device 100 may include calculating a content position for displaying the hologram content 380, based on a depth value for an object included in the obtained plurality of view images (S150).

In the calculating of the content position for displaying the hologram content 380 (S150), the at least one processor 130 may calculate the content position for displaying the hologram content 380 based on the depth value of the object included in the plurality of view images by executing instructions or program code of the content position calculation module 122.

In this case, the depth value of the object included in the plurality of view images may be obtained based on metadata information included in a header of the plurality of view images obtained in the obtaining of the plurality of view images (S100). Specifically, the depth value of the object may be obtained based on distance information between a plurality of cameras and the object included in the plurality of view images included in the metadata information.

However, the present disclosure is not limited thereto, and the operating method of the electronic device 100 may further include calculating the depth value of the object included in the plurality of view images based on the obtained plurality of view images.

In the calculating of the depth value of the object included in the plurality of view images, the at least one processor 130 may calculate the depth value of the object included in the plurality of view images by executing instructions or program code of the content position calculation module 122.

Hereinafter, the calculating of the content position for displaying the hologram content 380 will be described later with reference to FIG. 8.

In an embodiment of the present disclosure, in the generating of the plurality of hologram images 300, 310, and 320 (S200), the plurality of hologram images 300, 310, and 320 may be generated by using the calculated content position.

FIG. 5 is a diagram for describing a configuration of an electronic device according to an embodiment of the present disclosure. FIG. 6 is a diagram for describing an operation of displaying a plurality of phase-modulated images through an SLM according to an embodiment of the present disclosure. Hereinafter, the same reference numerals are assigned to the same components as those described with reference to FIGS. 1 and 2, and redundant descriptions will be omitted.

Referring to FIGS. 1, 2, 5, and 6, in an embodiment of the present disclosure, the electronic device 100 may include the coherent light source 111, the SLM 112, and the optical layer 113. In this case, the coherent light source 111, the SLM 112, and the optical layer 113 may be included in the display module 110.

In an embodiment of the present disclosure, at least one processor 130 may control the SLM 112 to display a final modulated image 115. The SLM 112 may display the final modulated image 115.

In an embodiment of the present disclosure, the final modulated image 115 may be an image generated by adding all of a plurality of phase-modulated images. The plurality of phase-modulated images may be images generated by multiplying the plurality of hologram images 300, 310, and 320 by the plurality of phase delay patterns 330 and 340 respectively corresponding to the plurality of hologram images 300, 310, and 320.

In an embodiment of the present disclosure, each of the plurality of hologram images 300, 310, and 320 may be an image generated by performing inversion-optical propagation on each of a plurality of view images by a distance of a content position 840 such that the plurality of view images are formed as one image at the content position 840 (see FIG. 8) and provided as the content 380.

In this case, the inversion-optical propagation may be performed by using an optical propagation model for modeling propagation of light. In an embodiment of the present disclosure, each of the plurality of hologram images 300, 310, and 320 may be generated by performing a convolution operation between each of the plurality of view images and an inverse function of the optical propagation model to which the content position 840 is applied.

The optical propagation model may be modeled through Rayleigh-Sommerfeld diffraction integral or the like. However, the present disclosure is not limited thereto, and various inversion-optical propagation models for generating the plurality of hologram images 300, 310, and 320 from the plurality of view images may be used.

In an embodiment of the present disclosure, a position or a shape of an object included in the plurality of view images may be different according to different positions of the plurality of views 210, 220, and 230 where the plurality of view images are captured.

In an embodiment of the present disclosure, the plurality of hologram images 300, 310, and 320 may include a first hologram image 300, a second hologram image 310, and a third hologram image 320. The plurality of views 210, 220, and 230 may include a first view 210, a second view 220, and a third view 230.

In an embodiment of the present disclosure, a real object may have an "A" shape. "A" captured by a camera located at the first view 210 may be included in a view image corresponding to the first view 210. "A" captured by a camera located at the second view 220 may be included in a view image corresponding to the second view 220. "A" captured by a camera located at the third view 230 may be included in a view image corresponding to the third view 230.

In an embodiment of the present disclosure, the first hologram image 300 may be a hologram image generated by using the view image corresponding to the first view 210. The second hologram image 310 may be a hologram image generated by using the view image corresponding to the second view 220. The third hologram image 320 may be a hologram image generated by using the view image corresponding to the third view 230.

In an embodiment of the present disclosure, coherent light 114 provided to the SLM 112 through the coherent light source 111 may be referred to as a "reference-wave". The plurality of hologram images 300, 310, and 320 generated by performing inversion-optical propagation on the plurality of view images by the content position 840 may be referred to as an "object-wave".

In an embodiment of the present disclosure, an interference pattern for reproducing the object-wave by receiving the reference-wave may be displayed on the SLM 112.

In this case, the "interference pattern" may be a pattern generated due to interference between a wave of the reference-wave and a wave of the object-wave. When the reference-wave is provided to the SLM 112 on which the interference pattern of the reference-wave and the object-wave is displayed, the object-wave may be reproduced and displayed on the SLM 112.

In an embodiment of the present disclosure, when the reference-wave is provided in a direction perpendicular to the SLM 112, the object-wave may be displayed on the SLM 112 as the interference pattern. As the object-wave is displayed on the SLM 112 as the interference pattern and the reference-wave is provided to the SLM 112, the object-wave may be reproduced from the SLM 112 and directed to the plurality of views.

In this case, the "direction perpendicular to the SLM 112" may refer to a direction perpendicular to a top surface of the SLM 112 where the plurality of hologram images 300, 310, and 320 are reproduced and emitted.

In an embodiment of the present disclosure, the coherent light 114 corresponding to the reference-wave may be provided perpendicularly to the SLM 112. In this case, the plurality of hologram images 300, 310, and 320 may be displayed on the SLM 112 as the interference pattern.

For convenience of description, the following will be described assuming that the coherent light 114 is provided perpendicularly to the SLM 112. However, the present disclosure is not limited thereto, and when the coherent light 114 is provided to the SLM 112 at an angle other than a perpendicular angle, an interference pattern generated by using the coherent light 114 and the plurality of hologram images 300, 310, and 320 may be displayed on the SLM 112.

In an embodiment of the present disclosure, the plurality of phase delay patterns 330 and 340 may be patterns for modulating a phase of the coherent light 114 provided to the SLM 112 through the coherent light source 111.

In an embodiment of the present disclosure, each of the plurality of phase delay patterns 330 and 340 may serve as a phase plate to diffract light by adjusting a phase of the provided light. The plurality of phase delay patterns 330 and 340 may be patterns for modulating a propagation direction of the coherent light 114 provided to the SLM 112 into a plurality of different diffraction angles and emitting the coherent light 114.

In an embodiment of the present disclosure, the plurality of phase delay patterns 330 and 340 may be patterns applied to the SLM 112 to control an arrangement of a liquid crystal layer included in the SLM 112. The plurality of phase delay patterns 330 and 340 may vary depending on an angle at which the provided light is to be diffracted.

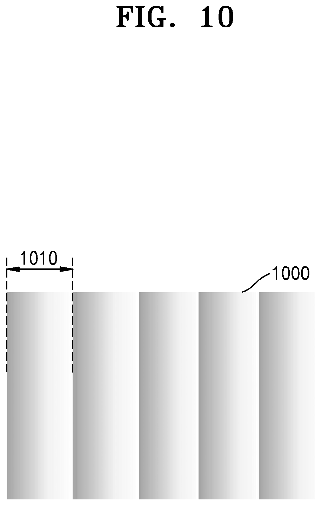

In an embodiment, the plurality of phase delay patterns 330 and 340 may include a plurality of grating patterns having the same period 1010 (see FIG. 10). The period 1010 of each of the plurality of grating patterns may be determined corresponding to an angle at which the provided light is to be diffracted.

Hereinafter, the plurality of grating patterns included in the plurality of phase delay patterns 330 and 340 and the period 1010 and the diffraction angle of each of the plurality of grating patterns will be described later with reference to FIGS. 8 and 10.

In an embodiment, the plurality of phase delay patterns 330 and 340 may include a first phase delay pattern 330 and a second phase delay pattern 340. The first phase delay pattern 330 may be a pattern for diffracting the coherent light 114 such that the coherent light 114 provided to the SLM 112 is directed toward the first view 210. The second phase delay pattern 340 may be a pattern for diffracting the coherent light 114 such that the coherent light 114 provided to the SLM 112 is directed toward the third view 230.

In an embodiment of the present disclosure, light emitted from the SLM 112 may pass through the optical layer 113 and may be directed toward the eyeball 200. The first phase delay pattern 330 may be a pattern for diffracting the coherent light 114 such that the coherent light 114 emitted from the SLM 112 is directed to the first view 210 through the optical layer 113. The second phase delay pattern 340 may be a pattern for diffracting the coherent light 114 such that the coherent light 114 emitted from the SLM 112 is directed to the third view 230 through the optical layer 113.

In an embodiment of the present disclosure, the second view 220 may be a view toward which light emitted from the SLM 112 is directed, even without modulating the propagation direction of the coherent light 114 provided to the SLM 112. The second view 220 may be a view toward which light, which is not diffracted at another angle in the SLM 112, is directed through the optical layer 113.

In an embodiment of the present disclosure, a propagation direction of the coherent light 114 provided to the SLM 112 may be the same as a direction from the SLM 112 to the second view 220. In this case, a phase delay pattern for causing light emitted from the SLM 112 to be directed toward the second view 220 may not be required.

In an embodiment, the plurality of phase-modulated images may include a first phase-modulated image, a second phase-modulated image, and a third phase-modulated image.

The first phase-modulated image may be an image generated by multiplying the first hologram image 300 by the first phase delay pattern 330. The third phase-modulated image may be an image generated by multiplying the third hologram image 320 by the second phase delay pattern 340. The second phase-modulated image may be the second hologram image 310.

However, the present disclosure is not limited thereto, and when a phase delay pattern for causing light emitted from the SLM 112 to be directed toward the second view 220 is required, the second phase-modulated image may be an image generated by multiplying the second hologram image 310 by the corresponding phase delay pattern.

In an embodiment of the present disclosure, the at least one processor 130 may control the SLM 112 to display the first phase-modulated image, the second phase-modulated image, and the third phase-modulated image. The SLM 112 may display the first phase-modulated image, the second phase-modulated image, and the third phase-modulated image.

In an embodiment of the present disclosure, the first phase-modulated image, the second phase-modulated image, and the third phase-modulated image may be displayed on the SLM 112 as an interference pattern. In an embodiment of the present disclosure, the final modulated image 115 generated by adding all of the first phase-modulated image, the second phase-modulated image, and the third phase-modulated image may be displayed on the SLM 112.

In an embodiment of the present disclosure, the final modulated image 115 may be displayed on the SLM 112 as an interference pattern.

In an embodiment of the present disclosure, the coherent light source 111 may provide the coherent light 114 to the SLM 112 on which the final modulated image 115 is displayed. Although FIG. 5 illustrates that the coherent light 114 provided from the coherent light source 111 passes through the SLM 112 and is directed to the optical layer 113, the present disclosure is not limited thereto. In an embodiment, the coherent light 114 provided from the coherent light source 111 may be reflected from the SLM 112 and directed toward the optical layer 113.

In addition, although FIG. 5 illustrates that the coherent light source 111, the SLM 112, and the optical layer 113 are arranged in a line, the present disclosure is not limited thereto. The coherent light source 111 may be disposed on a side surface of the SLM 112 or between the SLM 112 and the optical layer 113.

In an embodiment of the present disclosure, as the coherent light 114 is provided to the SLM 112 showing the final modulated image 115, the first hologram image 300, the second hologram image 310, and the third hologram image 320 may be reproduced.

In an embodiment of the present disclosure, the first hologram image 300 reproduced by the coherent light 114 may be referred to as a first generated image 350. The second hologram image 310 reproduced by the coherent light 114 may be referred to as a second generated image 360. The third hologram image 320 reproduced by the coherent light 114 may be referred to as a third generated image 370.

In this case, the first generated image 350 may be reproduced by the first phase-modulated image to have a propagation direction toward the first view 210. The first generated image 350 may be an image reproduced as a phase of the first hologram image 300 is modulated by the first phase delay pattern 330.

The third generated image 370 may be reproduced by the third phase-modulated image to have a propagation direction toward the third view 230. The third generated image 370 may be an image reproduced as a phase of the third hologram image 320 is modulated by the second phase delay pattern 340.

The second generated image 360 may be reproduced by the second phase-modulated image to have a propagation direction toward the second view 220. The second generated image 360 may be an image reproduced without phase modulation of the second hologram image 310.

Referring to FIGS. 5 and 6, the first generated image 350 reproduced in the SLM 112 may be directed toward the first view 210 of the eyeball 200 through the optical layer 113. The second generated image 360 reproduced in the SLM 112 may be directed toward the second view 220 of the eyeball 200 through the optical layer 113. The third generated image 370 reproduced in the SLM 112 may be directed toward the third view 230 of the eyeball 200 through the optical layer 113.

In an embodiment of the present disclosure, a period of the plurality of grating patterns included in the first phase delay pattern 330 may be determined corresponding to a diffraction angle for diffracting the reproduced first hologram image 300 such that the first generated image 350 is directed toward the first view 210. A period of the plurality of grating patterns included in the second phase delay pattern 340 may be determined corresponding to a diffraction angle for diffracting the reproduced third hologram image 320 such that the third generated image 370 is directed toward the third view 230.

Specifically, the period of the plurality of grating patterns included in the first phase delay pattern 330 may be determined based on at least one of a distance between the SLM 112 and the optical layer 113, an optical feature of the optical layer 113, or a shape of the optical layer 113. When the optical layer 113 includes a lens, the period of the plurality of grating patterns included in the first phase delay pattern 330 may be determined based on at least one of a thickness of the lens, a distance between a center 800 (see FIG. 8) of the lens and the first view 210, or a first diffraction angle 810 (see FIG. 8).

In addition, the period of the plurality of grating patterns included in the second phase delay pattern 340 may be determined based on at least one of a distance between the SLM 112 and the optical layer 113, an optical feature of the optical layer 113, or a shape of the optical layer 113. When the optical layer 113 includes a lens, the period of the plurality of grating patterns included in the second phase delay pattern 340 may be determined based on at least one of a thickness of the lens, a distance between a center 900 of the lens and the third view 230, or a second diffraction angle 820 (see FIG. 8).

In an embodiment of the present disclosure, the first generated image 350, the second generated image 360, and the third generated image 370 reproduced in the SLM 112 may be provided to the first view 210, the second view 220, and the third view 230 of the eyeball 200 through the optical layer 113.

In an embodiment of the present disclosure, the first generated image 350 may be optically propagated and provided to the first view 210 of the eyeball 200. The second generated image 360 may be optically propagated and provided to the second view 220 of the eyeball 200. The third generated image 370 may be optically propagated and provided to the third view 230 of the eyeball 200.

In this case, because the first generated image 350, the second generated image 360, and the third generated image 370 are reproductions of the first hologram image 300, the second hologram image 310, and the third hologram image 320, they may be formed as one image at the content position 840 and provided as the content 380.

A display that provides two or more generated images into the pupil of the eyeball 200 may be referred to as a "super multi-view display". In order for a user using a super multi-view display to perceive two or more generated images provided into the pupil of each eyeball 200 as one clear image, an accommodation operation of the eyeball 200 may be performed.

In an embodiment of the present disclosure, a point where two or more generated images are formed as one may correspond to the content position 840. The one clear image may correspond to the hologram content 380. The accommodation operation of the eyeball 200 may be performed to focus on the hologram content 380.

Accordingly, as the first generated image 350, the second generated image 360, and the third generated image 370 are provided toward the first view 210, the second view 220, and the third view 230 included in the pupil of the eyeball 200, the accommodation operation of the eyeball 200 may be performed to focus on the hologram content 380 formed as "A".

Accordingly, the user may perceive depth information of the hologram content 380 and may feel a 3D effect of the hologram content 380.

In addition, the content position 840 may be a point where a vergence operation of a left eye and a right eye of the user is performed due to binocular disparity included in content provided to the left eye and the right eye of the user. Accordingly, it is possible to prevent the user from feeling dizziness or fatigued due to VAC.

FIG. 7 is a flowchart for describing an operation of generating a final modulated image according to an embodiment of the present disclosure. Hereinafter, the same reference numerals are assigned to the same steps as those described with reference to FIGS. 3 and 4, and redundant descriptions will be omitted.

Referring to FIGS. 2, 3, 4, and 7, in an embodiment of the present disclosure, a step of generating N phase-modulated images respectively corresponding to N views and a final modulated image is illustrated in FIG. 7.

In an embodiment of the present disclosure, after the calculating of the content position 840 (see FIG. 8) for displaying the hologram content 380 (S150), the operating method of the electronic device 100 may include generating N phase-modulated images respectively corresponding to N views.

Here, N may be the number of obtained plurality of view images. N may be the number of a plurality of views corresponding to the plurality of view images. The N views may be views included in the pupil of the eyeball. N may be a natural number of 1 or more.

Although FIG. 7 illustrates steps for generating a first phase-modulated image corresponding to a first view and steps for generating an Nth phase-modulated image corresponding to an Nth view, the present disclosure is not limited thereto. The operating method of the electronic device 100 may include a plurality of steps for generating N phase-modulated images respectively corresponding to N views.

In an embodiment of the present disclosure, the generating of the plurality of hologram images 300, 310, and 320 (S200) may include generating a first hologram image corresponding to the first view by using the calculated content position 840 (S201).

In the generating of the first hologram image (S201), the first hologram image may be generated by performing inversion-optical propagation from the content position 840 to the electronic device 100 with respect to a first view image corresponding to the first view.

In the generating of the first hologram image (S201), the first hologram image may be generated by performing inversion-optical propagation from the content position 840 to the optical layer 113 with respect to the first view image.

However, the present disclosure is not limited thereto, and the first hologram image may be generated by performing inversion-optical propagation from the content position 840 to the optical layer 113 with respect to the first view image, inversely calculating an optical path change by the optical layer 113, and performing inversion-optical propagation from the optical layer 113 to the SLM 112.

In the generating of the first hologram image (S201), the at least one processor 130 may generate the first hologram image corresponding to the first view by executing instructions or program code of the hologram image generation module 125.

In an embodiment of the present disclosure, the generating of the plurality of hologram images 300, 310, and 320 (S200) may include generating an Nth hologram image corresponding to the Nth view by using the calculated content position 840 (S202).

In the generating of the Nth hologram image (S202), the Nth hologram image may be generated by performing inversion-optical propagation from the content position 840 to the optical layer 113 with respect to an Nth view image corresponding to the Nth view. However, the present disclosure is not limited thereto, and the Nth hologram image may be generated by performing inversion-optical propagation from the content position 840 to the optical layer 113 with respect to the Nth view image, inversely calculating an optical path change by the lens 113, and performing inversion-optical propagation from the optical layer 113 to the SLM 112.

In the generating of the Nth hologram image (S202), the at least one processor 130 may generate the Nth hologram image corresponding to the Nth view by executing instructions or program code of the hologram image generation module 125.

In an embodiment of the present disclosure, the calculating of the plurality of diffraction angles (S300) may include calculating a first diffraction angle for diffracting the first hologram image such that the first hologram image reproduced in the SLM 112 is directed toward the first view (S301).

In the calculating of the first diffraction angle (S301), the at least one processor 130 may calculate the first diffraction angle for diffracting the first hologram image such that the first hologram image is directed toward the first view by executing instructions or program code of the diffraction angle calculation module 123.

In an embodiment of the present disclosure, the calculating of the plurality of diffraction angles (S300) may include calculating an Nth diffraction angle for diffracting the Nth hologram image such that the Nth hologram image reproduced in the SLM 112 is directed toward the Nth view (S302).

In the calculating of the Nth diffraction angle (S302), the at least one processor 130 may calculate the Nth diffraction angle for diffracting the Nth hologram image such that the Nth hologram image is directed toward the Nth view by executing instructions or program code of the diffraction angle calculation module 123.

In an embodiment of the present disclosure, the generating of the plurality of phase delay patterns 330 and 340 (S400) may include generating a first phase delay pattern corresponding to the first diffraction angle (S401). The first phase delay pattern may include a plurality of grating patterns that have the same period and are repeated. A period of each of the plurality of grating patterns may be determined corresponding to the first diffraction angle. The plurality of grating patterns may be generated such that the reproduced first hologram image is diffracted by the first diffraction angle.

In the generating of the first phase delay pattern (S401), the at least one processor 130 may generate the first phase delay pattern corresponding to the first diffraction angle by executing the instructions or program code of the phase delay pattern generation module 126.

In an embodiment of the present disclosure, the generating of the plurality of phase delay patterns 330 and 340 (S400) may include generating an Nth phase delay pattern corresponding to the Nth diffraction angle (S402). The Nth phase delay pattern may include a plurality of grating patterns that have the same period and are repeated. A period of each of the plurality of grating patterns may be determined corresponding to the Nth diffraction angle. The plurality of grating patterns may be generated such that the reproduced Nth hologram image is diffracted by the Nth diffraction angle.

In the generating of the Nth phase delay pattern (S402), the at least one processor 130 may generate the first phase delay pattern corresponding to the Nth diffraction angle by executing instructions or program code of the phase delay pattern generation module 126.

In an embodiment of the present disclosure, the generating of the plurality of phase-modulated images (S500) may include generating a first phase-modulated image by multiplying the first hologram image by the first phase delay pattern (S501).

In the generating of the first phase-modulated image (S501), the at least one processor 130 may generate the first phase-modulated image by multiplying the first hologram image by the first phase delay pattern corresponding to the first hologram image by executing instructions or program code of the phase-modulated image generation module 127.

In an embodiment of the present disclosure, the generating of the plurality of phase-modulated images (S500) may include generating an Nth phase-modulated image by multiplying the Nth hologram image by the Nth phase delay pattern (S502).

In the generating of the Nth phase-modulated image (S502), the at least one processor 130 may generate the Nth phase-modulated image by multiplying the Nth hologram image by the Nth phase delay pattern corresponding to the Nth hologram image by executing instructions or program code of the phase-modulated image generation module 127.

In an embodiment of the present disclosure, the operating method of the electronic device 100 may include generating the final modulated image 115 (see FIG. 5) by adding all of the generated plurality of phase-modulated images (S610).

In an embodiment of the present disclosure, in the generating of the final modulated image (S610), the final modulated image 115 may be generated by adding all of the first to Nth phase-modulated images.

In the generating of the final modulated image 115 (S610), the at least one processor 130 may generate the final modulated image 115 by adding all of the generated plurality of phase-modulated images by executing instructions or program code of the modulated image generation module 124. The at least one processor 130 may generate the final modulated image 115 by adding all of the first to Nth phase-modulated images.

In an embodiment of the present disclosure, the operating method of the electronic device 100 may include displaying the final modulated image 115 through the display module 110 (S620). In the displaying of the final modulated image (S620), the final modulated image 115 may be displayed through the SLM 112.

In the displaying of the final modulated image 115 (S620), the at least one processor 130 may control the SLM 112 to display the final modulated image 115.

In FIG. 7, an operation for generating a phase-modulated image corresponding to each view is divided into a plurality of steps. However, the present disclosure is not limited thereto, and an operation for generating a phase-modulated image corresponding to each view may be performed by being divided into fewer steps or more steps than the steps illustrated in FIG. 7.

FIG. 8 is a diagram for describing an operation of calculating a plurality of diffraction angles and a content position according to an embodiment of the present disclosure. FIG. 9 is a flowchart for describing an operation of calculating a content position of hologram content according to an embodiment of the present disclosure.

Hereinafter, the same reference numerals are assigned to the same steps as those described with reference to FIG. 3, and redundant descriptions will be omitted. In addition, the same reference numerals are assigned to the same components as those described with reference to FIGS. 5 and 6, and redundant descriptions will be omitted. In addition, for convenience of description, the optical layer 113 may be referred to as a lens included in the optical layer 113.

Referring to FIGS. 5, 6, and 8, a first direction axis 10, a second direction axis 20, and a third direction axis 30 are illustrated in FIG. 8. Directions indicated by the first direction axis 10, the second direction axis 20, and the third direction axis 30 are relative concepts and may be changed to other directions.

In addition, the directions indicated by the first direction axis 10, the second direction axis 20, and the third direction axis 30 may be described as a first direction, a second direction, and a third direction, respectively. In the present disclosure, the first direction axis 10 and the second direction axis 20 may be directions orthogonal to each other, and the third direction axis 30 may be a normal direction with respect to a plane defined by the first direction axis 10 and the second direction axis 20.

In an embodiment of the present disclosure, the display module 110 may include the SLM 112 and the lens 113. The SLM 112 and the lens 113 may be arranged in a direction parallel to the second direction axis 20. An optical axis of the lens 113 may be parallel to the second direction axis 20. In this case, the optical axis of the lens 113 may be an axis passing through two focal points of the lens 113.

In an embodiment of the present disclosure, the plurality of generated images 350, 360, and 370 reproduced from the SLM 112 may be optically propagated in the second direction axis 20 through the lens 113.

The user may view the content 380 provided through the SLM 112 and the lens 113 at a position spaced apart from the lens 113 in the second direction axis 20. The user may view the content 380 at a position spaced apart from the lens 113 in the second direction axis 20.

In an embodiment of the present disclosure, the eyeball 200 of the user may be located at a focus of the lens 113. The user may view the content 380 provided by the electronic device 100 in a state where the eyeball 200 is located at the focus of the lens 113.

In this case, a distance between the electronic device 100 and the eyeball 200 may be a focal length 860 of the lens 113. The focal length 860 of the lens 113 may be a distance from the center 800 of the lens 113 to the focus of the lens 113.

In an embodiment of the present disclosure, the plurality of views 210, 220, and 230 included in the pupil of the eyeball 200 may be located on an imaginary line passing through the focus of the lens 113 and having a direction perpendicular to the optical axis of the lens 113.

In an embodiment of the present disclosure, the second view 220 among the plurality of views 210, 220, and 230 may be located at the focus of the lens 113. The first view 210 among the plurality of views 210, 220, and 230, may be located in a direction spaced apart from the second view 220 in the first direction axis 10. The third view 230 among the plurality of views 210, 220, and 230 may be located in a direction spaced apart from the second view 220 in a direction opposite to the first direction axis 10.

In an embodiment of the present disclosure, a line passing through the center 800 of the lens 113 and the first view 210 may be referred to as a first optical path 801. A line passing through the center 800 of the lens 113 and the second view 220 may be referred to as a second optical path 802. In this case, the second optical path 802 may be in a direction parallel to the optical axis of the lens 113. A line passing through the center 800 of the lens 113 and the third view 230 may be referred to as a third optical path 803.

In an embodiment of the present disclosure, at least one processor 130 may calculate angles between the optical axis of the lens 113 and the plurality of lines 801, 802, and 803 passing through the center 800 of the lens 113 and each of the plurality of views 210, 220, and 230 as the plurality of diffraction angles 810 and 820.

The at least one processor 130 may calculate an angle formed between the first optical path 801 and the optical axis of the lens 113 as the first diffraction angle 810. In this case, the angle formed between the first optical path 801 and the optical axis of the lens 113 may be an angle formed between the first optical path 801 and the second optical path 802.

The at least one processor 130 may calculate an angle formed between the second optical path 802 and the optical axis of the lens 113 as 0°.

The at least one processor 130 may calculate an angle formed between the third optical path 803 and the optical axis of the lens 113 as the second diffraction angle 820. In this case, the angle formed between the third optical path 803 and the optical axis of the lens 113 may be an angle formed between the third optical path 803 and the second optical path 802.

In an embodiment of the present disclosure, FIG. 8 illustrates three views 210, 220, and 230 and two diffraction angles 810 and 820 for directing three generated images 350, 360, and 370 provided through the SLM 112 and the lens 113 toward the three views 210, 220, and 230.

However, the present disclosure is not limited thereto, and when the obtained plurality of view images include two or four or more view images, the at least one processor 130 may calculate a plurality of diffraction angles for being directed toward two or four views.

In addition, when the second view 220 is located at a position other than the focus of the lens 113, the at least one processor 130 may calculate an angle other than 0° formed between the second optical path 802 and the optical axis of the lens 113 as a second diffraction angle.

Also, in FIG. 8, a "first reference distance 830", a "second reference distance 850", and the "content position 840" are illustrated.

The "first reference distance 830" may be a closest distance among distances set such that the hologram content 380 is formed in a direction of the second direction axis 20 from the optical layer 113. The "first reference distance 830" may be a closest distance among distances set such that the hologram content 380 is formed in the direction of the second direction axis 20 from the lens 113.

The first reference distance 830 may be a minimum distance at which two lights provided from two pixels (e.g., two pixels located at vertices facing each other) having a farthest distance among a plurality of pixels included in the SLM 112 may overlap each other.

In an embodiment of the present disclosure, the first reference distance 830 may be set differently according to a type of the SLM 112, a resolution of the SLM 112, a shape of the lens 113, a refractive index of the lens 113, a distance between the SLM 112 and the lens 113, or the like.

The at least one processor 130 may control the electronic device 100 such that the hologram content 380 displayed through the SLM 112 is formed at a distance equal to the first reference distance 830 or greater than the first reference distance 830 from the lens 113.

The "second reference distance 850" may be a farthest distance among distances set such that the hologram content 380 is formed in the direction of the second direction axis 20 from the optical layer 113. The "second reference distance 850" may be a farthest distance among distances set such that the hologram content 380 is formed in the direction of the second direction axis 20 from the lens 113.

In an embodiment of the present disclosure, the second reference distance 850 may be set differently according to the type of the SLM 112, the resolution of the SLM 112, the shape of the lens 113, the refractive index of the lens 113, the distance between the SLM 112 and the lens 113, or the like.

The at least one processor 130 may control the electronic device 100 such that the hologram content 380 displayed through the SLM 112 is formed at a distance equal to the second reference distance 850 or less than the second reference distance 850 from the lens 113.

The second reference distance 850 may be a distance farther from the optical layer 113 in the direction of the second direction axis 20 than the first reference distance 830.

In an embodiment of the present disclosure, the first reference distance 830 and the second reference distance 850 may be preset distances. The at least one processor 130 may obtain information on the preset first reference distance 830 and second reference distance 850 from an external server or an external electronic device through the input/output interface 140 or the communication interface 150.

In an embodiment of the present disclosure, the content position 840, which is a distance set such that the hologram content 380 is formed in the direction of the second direction axis 20 from the optical layer 113, may be determined according to a depth value for an object included in the obtained plurality of view images. The content position 840 may be a distance set such that the hologram content 380 is formed in the direction of the second direction axis 20 from the lens 113.

Referring to FIGS. 2, 3, 4, 8, and 9, in an embodiment of the present disclosure, the calculating of the content position for displaying the hologram content 380 (S150) may include obtaining a depth value for an object included in the plurality of view images (S110).

In an embodiment of the present disclosure, in the obtaining of the depth value for the object included in the plurality of view images (S110), the depth value for the object may be obtained based on metadata information included in the obtained plurality of view images.

In an embodiment of the present disclosure, in the obtaining of the depth value for the object included in the plurality of view images (S110), the depth value for the object may be obtained by using binocular disparity included in the obtained plurality of view images.

In the obtaining of the depth value for the object included in the plurality of view images (S110), at least one processor 130 may obtain the depth value for the object included in the plurality of view images by executing instructions or program code of the content position calculation module 122.

Referring to FIGS. 8 and 9, in an embodiment of the present disclosure, the calculating of the content position 840 for displaying the hologram content 380 (S150) may include determining whether the obtained depth value is less than a preset maximum depth value (S120).

In this case, the "maximum depth value" may be a depth value set such that hologram content of an object having a depth value greater than the corresponding depth value is displayed at the first reference distance 830.

In the determining whether the obtained depth value is less than the preset maximum depth value (S120), the at least one processor 130 may determine whether the obtained depth value is less than the preset maximum depth value by executing instructions or program code of the content position calculation module 122.

When it is determined that the depth value is equal to or greater than the maximum depth value, in the calculating of the content position 840 for displaying the hologram content 380 (S150), a point spaced apart from the optical layer 113 by a distance equal to the preset first reference distance 830 may be calculated as the content position 840 (S140).

When it is determined that the depth value is equal to or greater than the maximum depth value (S140) in the determining whether the depth value is less than the maximum depth value (S120), the at least one processor 130 may calculate the point spaced apart from the optical layer 113 by the distance equal to the preset first reference distance 830 as the content position 840 by executing instructions or program code of the content position calculation module 122.

For example, when an object included in the plurality of view images is spaced apart from a plurality of cameras by a distance of 10 meters, a depth value of the object may be set as the maximum depth value. When the object included in the plurality of view images is spaced apart from the plurality of cameras by a distance greater than 10 meters, such as 15 meters or 20 meters, a depth value of the object may be greater than the maximum depth value. In this case, the content position 840 may be calculated such that hologram content of the corresponding object is displayed at the first reference distance 830.

In this case, the distances of 10 meters, 15 meters, 20 meters, and the like are given as examples for convenience of description, and the present disclosure is not limited thereto.

In an embodiment of the present disclosure, the calculating of the content position 840 for displaying the hologram content 380 (S150) may include determining whether the obtained depth value is greater than a preset minimum depth value (S130).

In this case, the "minimum depth value" may be a depth value set such that hologram content of an object having a depth value less than the corresponding depth value is displayed at the second reference distance 850.

The determining whether the obtained depth value is greater than the preset minimum depth value (S130) may be performed when it is determined that the depth value is less than the maximum depth value in the determining whether the depth value is less than the maximum depth value (S120).

In the determining whether the obtained depth value is greater than the preset minimum depth value (S130), the at least one processor 130 may determine whether the obtained depth value is less than the preset minimum depth value by executing instructions or program code of the content position calculation module 122.

When it is determined that the depth value is equal to or less than the minimum depth value, in the calculating of the content position 840 for displaying the hologram content 380 (S150), a point spaced apart from the optical layer 113 by a distance equal to the preset second reference distance 950 may be calculated as the content position 840 (S132).

When it is determined that the depth value is equal to or less than the minimum depth value (S132) in the determining whether the depth value is greater than the minimum depth value (S130), the at least one processor 130 may calculate the point spaced apart from the optical layer 113 by the distance equal to the preset second reference distance 950 as the content position 840 by executing instructions or program code of the content position calculation module 122.

For example, when an object included in the plurality of view images is spaced apart from the plurality of cameras by a distance of 2 meters, a depth value of the object may be set as the minimum depth value. When an object included in the plurality of view images is spaced apart from the plurality of cameras by a distance less than 2 meters, such as 1 meter, a depth value of the object may be less than the minimum depth value. In this case, the content position 840 may be calculated such that hologram content of the corresponding object is displayed at the second reference distance 850.

In this case, the distances of 1 meter and 2 meters are given as examples for convenience of description, and the present disclosure is not limited thereto.

When it is determined that the depth value is greater than the minimum depth value, in the calculating of the content position 840 for displaying the hologram content 380 (S150), a point spaced apart from the optical layer 113 by a distance greater than the first reference distance 830 and less than the second reference distance 850 according to the depth value may be calculated as the content position 840 (S131).

In this case, the second reference distance 850 may be a distance farther from the optical layer 113 than the first reference distance 830. The second reference distance 850 may be a distance farther from the lens 113 than the first reference distance 830.

When it is determined that the depth value is greater than the minimum depth value (S131) in the determining whether the depth value is greater than the minimum depth value (S130), the at least one processor 130 may calculate the point spaced apart from the optical layer 113 by the distance greater than the first reference distance 930 and less than the second reference distance 950 as the content position 840 by executing instructions or program code of the content position calculation module 122.

In an embodiment of the present disclosure, the at least one processor 130 may calculate a distance corresponding to a depth value between the maximum depth value and the minimum depth value as the content position 840 by calculating the first reference distance 830 as the content position 840 when the obtained depth value is the maximum depth value and calculating the second reference distance 850 as the content position 840 when the obtained depth value is the minimum depth value.

In an embodiment of the present disclosure, the generating of the plurality of hologram images 300, 310, and 320 (S200) may include generating the plurality of hologram images 300, 310, and 320 by using the calculated content position 840.

FIG. 10 is a diagram for describing a phase delay pattern according to an embodiment of the present disclosure.

Referring to FIGS. 6 and 10, in an embodiment of the present disclosure, a kth phase delay pattern 1000, which is one of N phase delay patterns, is illustrated in FIG. 10.

In an embodiment of the present disclosure, the phase delay pattern 1000 may include a plurality of grating patterns. Each of the plurality of grating patterns may have the same period 1010.

In an embodiment of the present disclosure, the period 1010 of each of the plurality of grating patterns may be determined corresponding to a diffraction angle of light to be diffracted through the phase delay pattern 1000.

In an embodiment of the present disclosure, the period 1010 of each of the plurality of grating patterns may be determined by Equation 1 below. ${T}_{k} = \frac{λ}{sin {θ}_{k}} ,$ Equation 1

In this case, *Tₖ* may denote a period of a grating pattern included in the kth phase delay pattern. *λ* may denote a wavelength of the coherent light 114 provided to the SLM 112. *θₖ* may denote a diffraction angle for diffracting an Nth hologram image toward a kth view. In this case, k may be a natural number between 1 and N. N may be a natural number greater than 1.

Accordingly, as an angle to be diffracted through the phase delay pattern 1000 increases, the period 1010 of each of the plurality of grating patterns may decrease. In an embodiment of the present disclosure, according to a shape of each of the plurality of grating patterns included in the phase delay pattern 1000, light passing through the corresponding grating pattern may be refracted such that a propagation direction of the light is changed.

In addition, the present disclosure is not limited to Equation 1, and the period 1010 of each of the plurality of grating patterns may be determined according to a distance between the lens 113 and the SLM 112, a shape of the lens 113, a refractive index of the lens 113, and the like.

The phase retardation pattern 1000 of FIG. 10 may be a voltage pattern applied to a liquid crystal layer included in the SLM 112. An arrangement of LCs included in the liquid crystal layer may be determined by the phase retardation pattern 1000. The LCs included in the liquid crystal layer may be arranged in a plurality of triangular shapes corresponding to the plurality of grating patterns. In this case, each of the plurality of triangular shapes may be a shape of a right triangle.

However, the present disclosure is not limited thereto, and the LCs formed by the phase delay pattern 1000 may be arranged in various shapes capable of diffracting passing light as a phase plate.

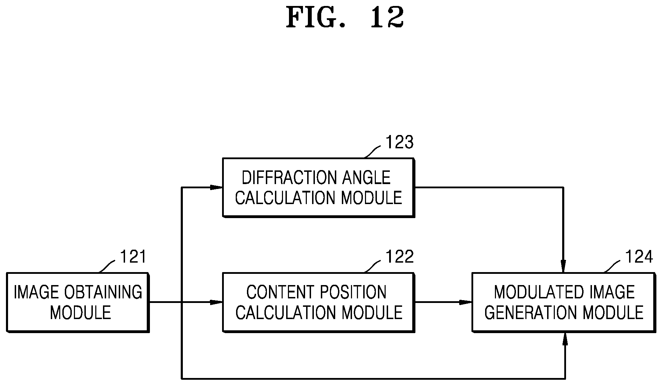

FIG. 11 is a flowchart for describing an operation of generating a plurality of phase-modulated images by using a modulated image generation module according to an embodiment of the present disclosure. FIG. 12 is a block diagram for describing an operation of generating a plurality of phase-modulated images by using a modulated image generation module according to an embodiment of the present disclosure.

Hereinafter, the same reference numerals are assigned to the same components as those described with reference to FIG. 2, and redundant descriptions will be omitted. In addition, the same reference numerals are assigned to the same steps as those described with reference to FIG. 3, and redundant descriptions will be omitted.

Referring to FIGS. 2, 3, and 11, in an embodiment of the present disclosure, the operating method of the electronic device 100 may further include generating a plurality of phase-modulated images by applying the plurality of view images, the content position 840 (see FIG. 8), and the plurality of diffraction angles 810 and 820 (see FIG. 8) to the modulated image generation module 124 (S550).

In the generating of the plurality of phase-modulated images by applying the plurality of view images, the content position 840, and the plurality of diffraction angles 810 and 820 to the modulated image generation module 124 (S550), at least one processor 130 may generate the plurality of phase-modulated images by applying the plurality of view images, the content position 840, and the plurality of diffraction angles 810 and 820 to the modulated image generation module 124.

In an embodiment of the present disclosure, the modulated image generation module 124 may include an AI model trained to infer the plurality of phase-modulated images for displaying the hologram content 380 (see FIG. 9) at the calculated content position 840.

In an embodiment of the present disclosure, the AI model included in the modulated image generation module 124 may include a plurality of neural network layers. Each of the plurality of neural network layers may include a plurality of weight values. The AI model may perform an operation of a present neural network layer through an operation of the plurality of weight values and an operation result of a previous neural network layer.

In an embodiment, the at least one processor 130 may train the AI model included in the modulated image generation module 124. The at least one processor 130 may perform transfer learning and fine-turning using a pre-trained model in order to train the AI model included in the modulated image generation module 124.

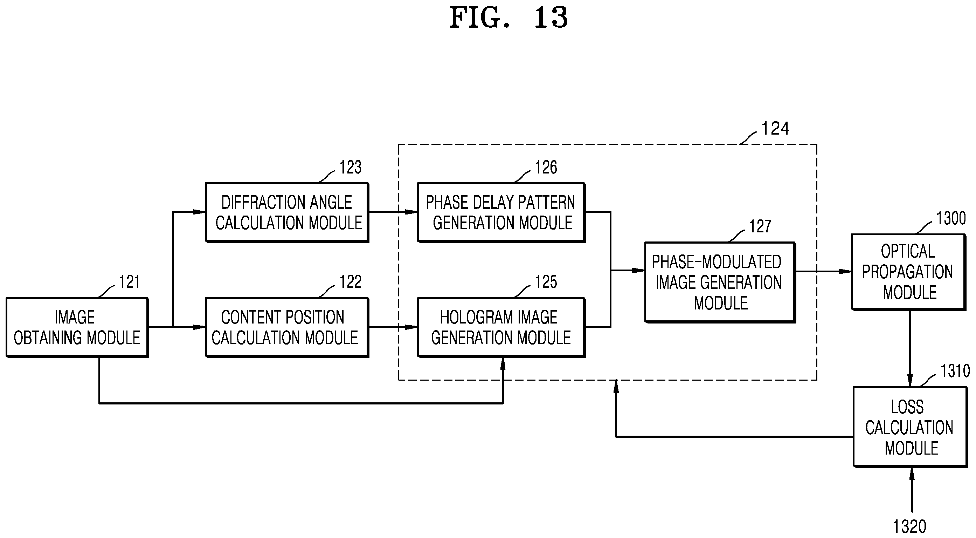

Hereinafter, a method of training the AI model included in the modulated image generation module 124 will be described below with reference to FIG. 13.

However, the present disclosure is not limited thereto, and the at least one processor 130 may receive, from an external server or surrounding electronic devices through the communication interface 150, an AI model trained to infer the plurality of phase-modulated images for displaying the hologram content 380 at the calculated content position 840 by using the plurality of view images, the content position 840, and the plurality of diffraction angles 810 and 820.

Referring back to FIGS. 1, 8, and 12, the image obtaining module 121 may obtain the plurality of view images respectively corresponding to the plurality of views 210, 220, and 230. The image obtaining module 121 may provide the obtained plurality of view images to the content position calculation module 122, the diffraction angle calculation module 123, and the modulated image generation module 124.

The content position calculation module 122 may calculate the content position 840 for displaying the hologram content 380, based on a depth value for an object included in the obtained plurality of view images. The content position calculation module 122 may provide the calculated content position 840 to the modulated image generation module 124.

The diffraction angle calculation module 123 may calculate the plurality of diffraction angles 810 and 820 required to direct the plurality of generated images 350, 360, and 370 reproduced in the SLM 112 toward the corresponding plurality of views 210, 220, and 230, respectively. The diffraction angle calculation module 123 may calculate the plurality of diffraction angles 810 and 820 by using positions of a plurality of cameras included in metadata of the obtained plurality of view images and the focal length 860 of the lens 113. The diffraction angle calculation module 123 may provide the plurality of calculated diffraction angles 810 and 820 to the modulated image generation module 124.

The modulated image generation module 124 may generate the plurality of phase-modulated images for displaying the hologram content 380 at the content position 840 by using the plurality of view images, the content position 840, and the plurality of diffraction angles 810 and 820.

The modulated image generation module 124 may generate the plurality of phase-modulated images by applying the plurality of view images, the content position 840, and the plurality of diffraction angles 810 and 820 to the AI model trained to infer the plurality of phase-modulated images for displaying hologram content at the provided content position.

FIG. 13 is a block diagram for describing an operation of training an AI model included in a modulated image generation module according to an embodiment of the present disclosure.

Referring to FIGS. 2 and 13, in an embodiment of the present disclosure, a method of training an AI model included in the modulated image generation module 124 may include obtaining a plurality of training view images generated by capturing an object in a plurality of views.

In the obtaining of the plurality of training view images, at least one processor 130 may obtain the plurality of training view images by executing instructions or program code of the image obtaining module 121.

In an embodiment of the present disclosure, an operating method of the electronic device 100 may include obtaining the plurality of training view images generated by capturing the object in the plurality of views.

In the obtaining of the plurality of training view images, the at least one processor 130 may obtain the plurality of training view images by executing instructions or program code of the image obtaining module 121.

In an embodiment of the present disclosure, the method of training the AI model included in the modulated image generation module 124 may include calculating a content position for displaying training hologram content based on a depth value of the object included in the obtained plurality of training view images.

In the calculating of the content position for displaying the training hologram content, the at least one processor 130 may calculate the content position for displaying the training hologram content based on the depth value of the object included in the plurality of training view images by executing instructions or program code of the content position calculation module 122.

In an embodiment of the present disclosure, the method of training the AI model included in the modulated image generation module 124 may include calculating a plurality of training diffraction angles required to direct a plurality of training hologram images reproduced in the SLM 112 toward the corresponding plurality of views.

In the calculating of the plurality of training diffraction angles, the at least one processor 130 may calculate the plurality of training diffraction angles required to direct the plurality of training hologram images reproduced in the SLM 112 toward the corresponding plurality of views by executing instructions or program code of the diffraction angle calculation module 123.

In an embodiment of the present disclosure, the method of training the AI model included in the modulated image generation module 124 may include generating the plurality of training hologram images based on the obtained plurality of training view images.

In the generating of the plurality of training hologram images, the plurality of training hologram images may be generated based on the obtained plurality of training view images and the calculated content position.

In the generating of the plurality of training hologram images, the at least one processor 130 may generate the plurality of training hologram images by applying the obtained plurality of training view images to the AI model included in the modulated image generation module 124.

In the generating of the plurality of training hologram images, the at least one processor 130 may generate the plurality of training hologram images by applying the obtained plurality of training view images and the calculated content position to the AI model included in the modulated image generation module 124.

In an embodiment of the present disclosure, the AI model may include a hologram image generation module 125. The at least one processor 130 may generate the plurality of training hologram images by applying the plurality of training view images and the calculated content position through the hologram image generation module 125 included in the AI model.

In an embodiment of the present disclosure, the method of training the AI model included in the modulated image generation module 124 may include generating a plurality of training phase delay patterns corresponding to the calculated plurality of training diffraction angles.

In the generating of the plurality of training phase delay patterns, the at least one processor 130 may generate the plurality of training phase delay patterns by applying the calculated plurality of diffraction angles to the AI model included in the modulated image generation module 124.

In an embodiment of the present disclosure, the AI model may include a phase delay pattern generation module 126. The at least one processor 130 may generate the plurality of training phase delay patterns through the phase delay pattern generation module 126 included in the AI model.

In an embodiment of the present disclosure, the method of training the AI model included in the modulated image generation module 124 may include generating a plurality of training phase-modulated images by multiplying the generated plurality of training hologram images by the plurality of training phase delay patterns.

In the generating of the plurality of training phase-modulated images, the at least one processor 130 may generate a plurality of training phase modulation patterns by applying the generated plurality of training hologram images and the plurality of training phase delay patterns to the AI model included in the modulated image generation module 124.

In an embodiment of the present disclosure, the AI model may include a module 127 for generating a phase delay image. The at least one processor 130 may generate the plurality of training phase-modulated images by multiplying the plurality of training hologram images and the plurality of training phase delay patterns through the phase-modulated image generation module 127 included in the AI model.

In an embodiment of the present disclosure, the method of training the AI model included in the modulated image generation module 124 may include generating the training hologram content formed at the content position by optically propagating the generated plurality of training phase modulation patterns.

In the generating of the training hologram content formed at the content position, the at least one processor 130 may generate the training hologram content displayed at the content position by optically propagating the generated plurality of training phase modulation patterns by executing instructions or program code of an optical propagation module 1300 including an optical propagation algorithm.

In an embodiment of the present disclosure, the method of training the AI model included in the modulated image generation module 124 may include training the AI model included in the modulated image generation module 124 by using a loss function that compares the training hologram content displayed by the plurality of training phase-modulated images with object content 1320 by the plurality of training view images.

In the training of the AI model included in the modulated image generation module 124, weight values of the AI model included in the modulated image generation module 124 may be updated by using the loss function.

In this case, the "object content 1320" may be content generated by adding all of the plurality of training view images obtained by capturing the object. The object content 1320 may be target hologram content to be provided by the electronic device 100 to a user by using the plurality of training view images.

The loss function that compares the hologram content with the object content 1320 may have a larger value as a difference between the hologram content and the object content 1320 increases. The loss function may have a smaller value as the difference between the hologram content and the object content decreases.

In an embodiment, the training hologram content generated by optically propagating the generated plurality of training phase modulation patterns to the content position may have low sharpness, or an interference pattern may be included in the hologram content. Accordingly, there may be a difference between the hologram content and the object content 1320.

In an embodiment, in the training of the AI model included in the modulated image generation module 124, the weight values of the AI model included in the modulated image generation module 124 may be updated to minimize the loss function by using a forward propagation algorithm and a back propagation algorithm.

In the training of the AI model included in the modulated image generation module 124 by using the loss function, the at least one processor 130 may train the AI model included in the modulated image generation module 124 by using the loss function that compares the training hologram content with the object content 1320 by executing instructions or program code of a loss calculation module 1310.

In this case, the loss calculation module 1310 may include the loss function, the forward propagation algorithm, the back propagation algorithm, and the like.

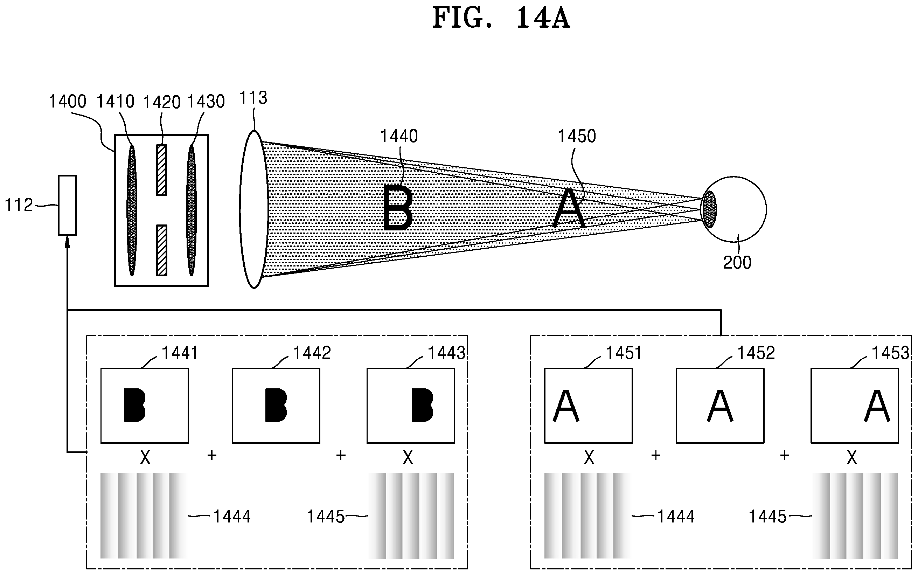

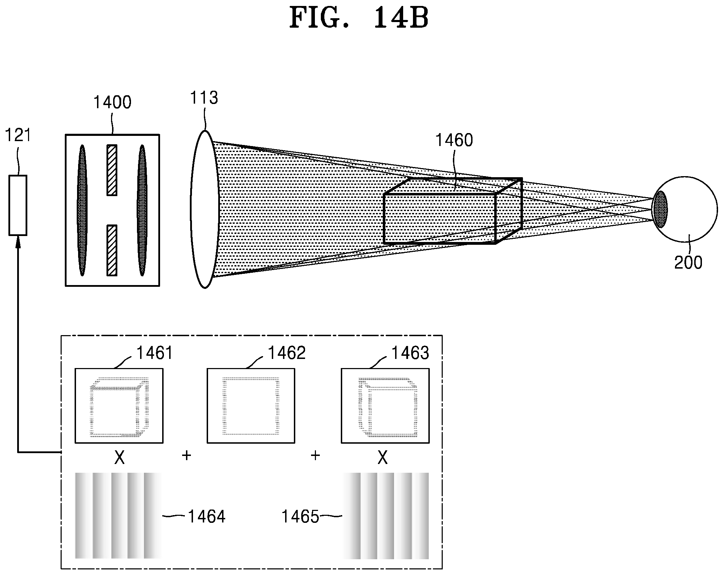

FIG. 14A is a diagram for describing an operation of displaying pieces of hologram content having two or more different depth values according to an embodiment of the present disclosure. FIG. 14B is a diagram for describing an operation of displaying pieces of hologram content having continuous depth values according to an embodiment of the present disclosure. Hereinafter, the same reference numerals are assigned to the same components as those described with reference to FIGS. 1 and 6, and redundant descriptions will be omitted.

Referring to FIGS. 2 and 14A, in an embodiment of the present disclosure, the electronic device 100 may further include a 4-f optical system 1400.

In an embodiment of the present disclosure, the 4-f optical system 1400 may be disposed between the SLM 112 and the optical layer 113. The 4-f optical system 1400 may include a first optical lens 1410 and a second optical lens 1430.

A plurality of hologram images reproduced in the SLM 112 may be located at a left focal position of the first optical lens 1410. A plurality of hologram images from which noise is removed through the first optical lens 1410 and the second optical lens 1430 may be displayed at a right focal position of the second optical lens 1430. A right focal position of the first optical lens 1410 and a left focal position of the second optical lens 1430 may be the same.

In an embodiment of the present disclosure, the 4-f optical system 1400 may include a slit 1420 disposed between the first optical lens 1410 and the second optical lens 1430. In this case, the slit 1420 may be located at the right focal position of the first optical lens 1410.

In an embodiment of the present disclosure, the 4-f optical system 1400 may be configured to remove noise included in the plurality of hologram images reproduced in the SLM 112.

In an embodiment of the present disclosure, the 4-f optical system 1400 and the optical layer 113 may be separate components. However, the present disclosure is not limited thereto, and the 4-f optical system 1400 may be a component included in the optical layer 113. In this case, the 4-f optical system 1400 and the lens 113 shown in FIG. 8 may be separate components. In this case, the 4-f optical system 1400 may be disposed between the SLM 112 and the lens 113.

In an embodiment of the present disclosure, two or more objects may be included in a plurality of view images that are obtained. Depth values of the two or more objects included in the plurality of view images may be different from each other.

In an embodiment of the present disclosure, an object having a shape of "A" and an object having a shape of "B" may be included in the plurality of view images. A depth value of "A" and a depth value of "B" may be different from each other. Distances between "A" and a plurality of cameras included in metadata of the plurality of view images may be different from distances between B and the plurality of cameras. In addition, binocular disparity of "A" and binocular disparity of "B" may be different from each other.

In an embodiment of the present disclosure, because the depth value of the object "A" and the depth value of the object "B" are different from each other, a content position where hologram content 1450 corresponding to "A" is displayed and a content position where hologram content 1440 corresponding to "B" is displayed, which are calculated by at least one processor 130, may be different from each other.

In an embodiment of the present disclosure, when the depth value of "B" is greater than the depth value of "A", a distance from the lens 113 to the content position where the hologram content 1440 corresponding to "B" is displayed may be less than a distance from the lens 113 to the content position where the hologram content 1450 corresponding to "A" is displayed.

In an embodiment of the present disclosure, the at least one processor 130 may generate a plurality of hologram images 1441, 1442, and 1443 corresponding to "B" by performing inversion-optical propagation on each of the plurality of view images including "B" by the distance to the content position where the hologram content 1440 corresponding to "B" is displayed.

In an embodiment of the present disclosure, the at least one processor 130 may generate a plurality of hologram images 1451, 1452, and 1453 corresponding to "A" by performing inversion-optical propagation on each of the plurality of view images including "A" by the distance to the content position where the hologram content 1450 corresponding to "A" is displayed.

In this case, angles at which the plurality of hologram images 1441, 1442, and 1443 corresponding to "B" and the plurality of hologram images 1451, 1452, and 1453 corresponding to "A", which are reproduced through the SLM 112, the 4-f optical system 1400, and the lens 113, are diffracted to be directed toward a plurality of views included in a pupil of the eyeball 200 may be the same.

Accordingly, the at least one processor 130 may generate a plurality of phase delay patterns 1444 and 1445 corresponding to a plurality of diffraction angles.

The at least one processor 130 may generate a plurality of first phase-modulated images by multiplying the plurality of hologram images 1441, 1442, and 1443 corresponding to "B" by the plurality of phase delay patterns 1444 and 1445 respectively corresponding to the plurality of hologram images 1441, 1442, and 1443 corresponding to "B".

The at least one processor 130 may generate a plurality of second phase-modulated images by multiplying the plurality of hologram images 1451, 1452, and 1453 corresponding to "A" by the plurality of phase delay patterns 1444 and 1445 respectively corresponding to the plurality of hologram images 1451, 1452, and 1453 corresponding to "A".

The at least one processor 130 may generate a final modulated image by adding the plurality of first phase-modulated images and the plurality of second phase-modulated images. The at least one processor 130 may control the SLM 112 to display the final modulated image.

Through this, the electronic device 100 may provide a plurality of pieces of hologram content having different depth values to a user so that the user may feel various 3D effects.

Referring to FIG. 14B, the SLM 112, the 4-f optical system 1400, and the lens 113 are illustrated in FIG. 14B.

In an embodiment of the present disclosure, an object having continuous depth values may be included in a plurality of view images. In FIG. 14B, an object having a rectangular parallelepiped shape included in the plurality of view images is displayed as hologram content 1460.

The at least one processor 130 may calculate a plurality of continuous content positions corresponding to continuous depth values.

The at least one processor 130 may generate a plurality of hologram images 1461, 1462, and 1463 corresponding to the rectangular parallelepiped shape by performing inversion-optical propagation on each of the plurality of view images including the object having the rectangular parallelepiped shape by a distance from the lens 113 to each of the plurality of continuous content positions.

The at least one processor 130 may calculate a plurality of diffraction angles for providing the plurality of hologram images 1461, 1462, and 1463 having the rectangular parallelepiped shape reproduced through the SLM 112, the 4-f optical system 1400, and the lens 113 to a plurality of views included in the pupil of the eyeball 200.

The at least one processor 130 may generate a plurality of phase delay patterns 1464 and 1465 corresponding to the plurality of diffraction angles. The at least one processor 130 may generate a plurality of phase-modulated images by multiplying the plurality of hologram images 1461, 1462, and 1463 corresponding to the rectangular parallelepiped shape by the plurality of phase delay patterns 1464 and 1465 respectively corresponding to the plurality of hologram images 1461, 1462, and 1463.

The at least one processor may control the SLM 112 to display the plurality of phase-modulated images. The at least one processor may control the SLM 112 to display a final modulated image obtained by adding all of the plurality of phase-modulated images.

Accordingly, the electronic device 100 may provide the user with the object having the continuous depth values as the hologram content 1460. Although only three hologram images and two phase delay patterns are illustrated in FIG. 14B, the present disclosure is not limited thereto. In the present disclosure, the hologram content 1460 may be displayed by using a plurality of hologram images and a plurality of phase delay patterns repeated at short intervals so that the user may feel as if they are continuous.

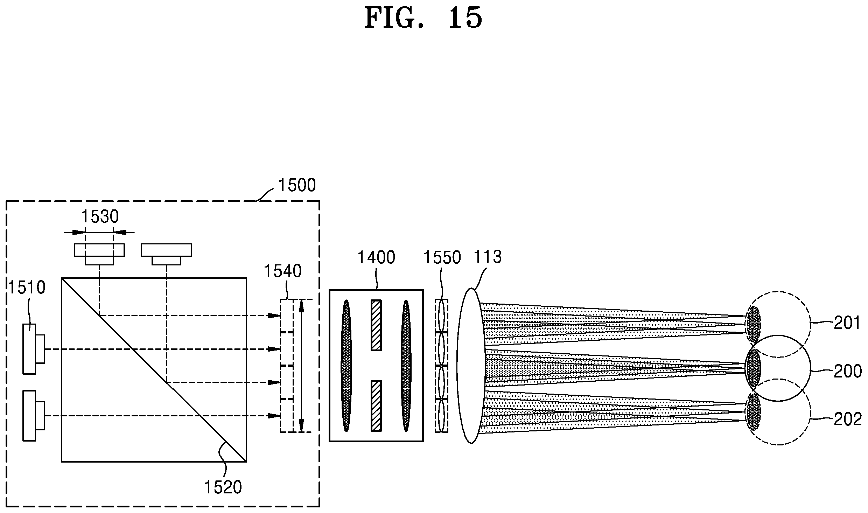

FIG. 15 is a diagram for describing an operation of displaying hologram content by using an SLM including a plurality of sub-SLMs according to an embodiment of the present disclosure. Hereinafter, the same reference numerals are assigned to the same components as those described with reference to FIGS. 5, 6, and 14B, and redundant descriptions will be omitted.

In an embodiment of the present disclosure, the electronic device 100 may include an SLM 1500, the 4-f optical system 1400, and the optical layer 113.

In an embodiment of the present disclosure, the SLM 1500 may include a plurality of sub-SLMs 1510 and a beam splitter 1520. Each of the plurality of sub-SLMs 1510 may receive the coherent light 114 from the coherent light source 111 (see FIG. 5).

A plurality of sub-hologram images may be respectively displayed on the plurality of sub-SLMs 1510. The plurality of sub-hologram images displayed on the plurality of sub-SLMs 1510 may be reproduced as a plurality of sub-generated images by the coherent light 114.

The beam splitter 1520 may reflect or transmit the plurality of sub-generated images reproduced in the plurality of sub-SLMs 1520 and provide the plurality of sub-generated images to the 4-f optical system 1400.

A generated image that is reflected or transmitted by the beam splitter 1520 and provided to the 4-f optical system 1400 may be an image in which the plurality of sub-generated images are connected. The beam splitter 1520 may be formed such that the plurality of sub-generated images are seamlessly connected and provided as a generated image without a boundary line between the plurality of sub-generated images.

In an embodiment of the present disclosure, an area of a sub-generated image reproduced in one sub-SLM 1520 may be a first area 1530. A second area 1540, which is an area of a generated image provided by being reflected or transmitted through the beam splitter 1520, may be a sum of a plurality of first areas.

In an embodiment of the present disclosure, through the plurality of sub-SLMs 1510 and the beam splitter 1520, the generated image having the second area 1540, which is relatively large, may be reproduced by using the sub-generated image having the first area 1530, which is relatively small.

In this case, as the generated image having the second area 1540 is generated by connecting the plurality of sub-images each having the first area 1530 without a region where an image is not displayed, the SLM 1500 that provides a seamless image may be implemented.

Also, because the generated image having the second area 1540 is reproduced as a combination of the plurality of sub-hologram images displayed on the plurality of sub-SLMs 1510, the generated image may be an image having high resolution.

In an embodiment of the present disclosure, the generated image having the second area 1540 may be provided to the optical layer 113 as a noise-removed generated image 1550 through the 4-f optical system 1400.

The noise-removed generated image 1550 may be provided to the eyeball 200 of the user through the optical layer 113. In this case, the generated image reproduced by the electronic device 100 including the plurality of sub-SLMs 1510 and the beam splitter 1520 has high resolution, and thus, even when a position of the user using the electronic device 100 is changed, the noise-removed generated image 1550 may be provided toward the eyeball 200 through the optical layer 113.

Accordingly, when the electronic device 100 provides the hologram content, a wide viewing angle may be provided to the user

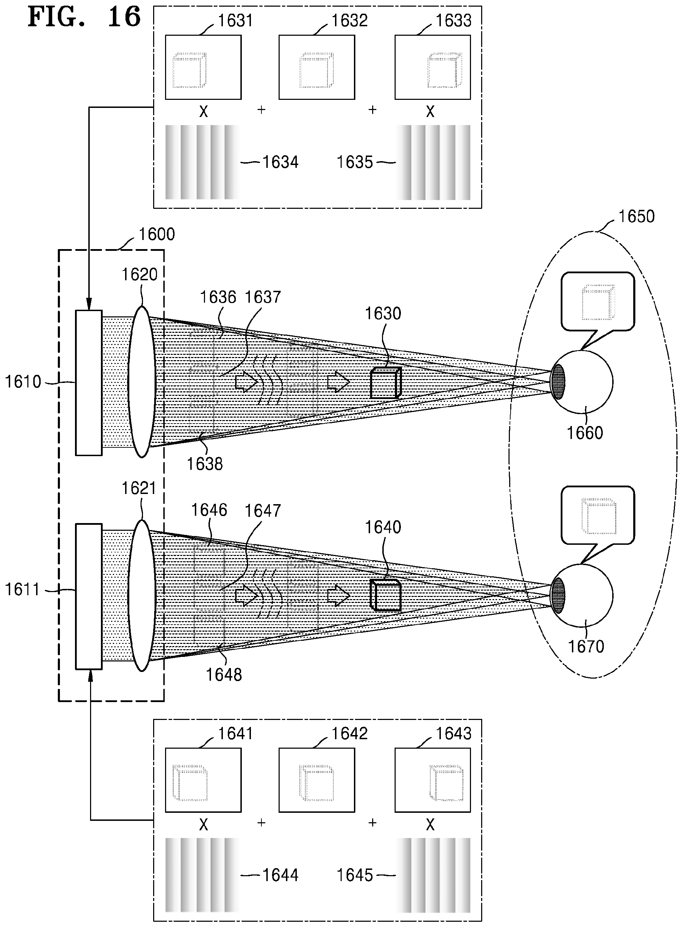

FIG. 16 is a block diagram for describing an operation of displaying hologram content by providing different pieces of sub-hologram content to two eyes of a user according to an embodiment of the present disclosure.

Referring to FIGS. 1, 2, 6, and 16, in an embodiment of the present disclosure, an electronic device 1600 providing pieces of hologram content 1630 and 1640 to a right eye 1660 and a left eye 1670 of a user 1650 is illustrated in FIG. 16.

In an embodiment of the present disclosure, the electronic device 1600 may include a first SLM 1610, a second SLM 1611, a first lens 1620, and a second lens 1621. However, the present disclosure is not limited thereto, and the electronic device 1600 may further include a coherent light source that provides coherent light to the first SLM 1610 and the second SLM 1611.

In an embodiment of the present disclosure, the electronic device 1600 may obtain a plurality of view images. The plurality of view images may be images obtained by capturing a real object in a plurality of different views.

Here, the plurality of views may include views respectively corresponding to positions of the right eye 1660 and the left eye 1670 of the user 1650. The plurality of views may include views spaced apart by a distance between the right eye 1660 and the left eye 1670.

Also, the plurality of views may include views included in a pupil of the right eye 1660 and a pupil of the left eye 1670. The plurality of views may include views included in a pupil of the right eye 1660 and views included in a pupil of the left eye 1670.

In an embodiment of the present disclosure, the plurality of view images may be images obtained by capturing a real object through a plurality of cameras located in each of the plurality of views. However, the present disclosure is not limited thereto, and the plurality of view images may be images obtained by capturing a real object through a camera including a micro lens array including a plurality of lenses located in each of the plurality of views.

In an embodiment of the present disclosure, the plurality of view images may include a plurality of first view images obtained from the view corresponding to the right eye 1660 and a plurality of second view images obtained from the view corresponding to the left eye 1670. In an embodiment of the present disclosure, a binocular disparity may exist between the plurality of first view images and the plurality of second view images.

In an embodiment of the present disclosure, the electronic device 1600 may calculate the first content position for displaying the first hologram content 1630 to be provided to the right eye 1660, based on the depth values included in the plurality of first view images.

In an embodiment of the present disclosure, the electronic device 1600 may generate the plurality of first view hologram images 1631, 1632, and 1633 by performing inversion-optical propagation on the plurality of first view images by using the calculated first content position.

In an embodiment of the present disclosure, the electronic device 1600 may calculate a plurality of first view diffraction angles for directing the plurality of first view hologram images 1631, 1632, and 1633 reproduced by the first SLM 1610 toward the views included in the pupil of the right eye 1660.

In an embodiment of the present disclosure, the electronic device 1600 may generate a plurality of first view phase delay patterns 1634 and 1635 corresponding to the calculated plurality of first view diffraction angles.

In an embodiment of the present disclosure, the electronic device 1600 may generate a plurality of first view phase-modulated images by multiplying the plurality of first view hologram images 1631, 1632, and 1633 by the plurality of first view phase delay patterns 1634 and 1635 respectively corresponding to the plurality of first view hologram images 1631, 1632, and 1633.

In an embodiment of the present disclosure, the electronic device 1600 may control the first SLM 1610 to display the generated plurality of first view phase-modulated images. The electronic device 1600 may control the first SLM 1610 to display a final first view modulation image obtained by adding all of the plurality of first view phase-modulated images.

In an embodiment of the present disclosure, the plurality of first generated images 1636, 1637, and 1638 may be reproduced through the first SLM 1610 displaying the final first view image. The plurality of first generated images 1636, 1637, and 1638 may be formed as the first hologram content 1630 at the first content position.

In an embodiment of the present disclosure, the electronic device 1600 may calculate the second content position for displaying the second hologram content 1640 to be provided to the left eye 1670, based on the depth values included in the plurality of second view images.

In an embodiment of the present disclosure, the electronic device 1600 may generate the plurality of second view hologram images 1641, 1642, and 1643 by performing inversion-optical propagation on the plurality of second view images by using the calculated second content position.

In an embodiment of the present disclosure, the electronic device 1600 may calculate a plurality of second view diffraction angles for directing the plurality of second view hologram images 1641, 1642, and 1643 reproduced by the second SLM 1611 toward the views included in the pupil of the left eye 1670.

In an embodiment of the present disclosure, the electronic device 1600 may generate a plurality of second view phase delay patterns 1644 and 1645 corresponding to the plurality of calculated second view diffraction angles.

In an embodiment of the present disclosure, the electronic device 1600 may generate a plurality of second view phase-modulated images by multiplying the plurality of second view hologram images 1641, 1642, and 1643 by the plurality of second view phase delay patterns 1644 and 1645 respectively corresponding to the plurality of second view hologram images 1641, 1642, and 1643.

In an embodiment of the present disclosure, the electronic device 1600 may control the second SLM 1611 to display the generated plurality of second view phase-modulated images. The electronic device 1600 may control the second SLM 1611 to display a final second view modulation image obtained by adding all of the plurality of second view phase-modulated images.

In an embodiment of the present disclosure, the plurality of second generated images 1646, 1647, and 1648 may be reproduced through the second SLM 1611 displaying the final second view image. The plurality of second generated images 1646, 1647, and 1648 may be formed as the second hologram content 1640 at the second content position.

The electronic device 1600 may provide different pieces of hologram content 1630 and 1640 to the right eye 1660 and the left eye 1670, respectively, to the user. Also, pieces of hologram content 1630 and 1640 formed at a content position may be provided to the right eye 1660 and the left eye 1670 through two or more hologram images, respectively.

Through this, the electronic device 1600 may provide a stereoscopic image to the user, and may prevent the user from feeling dizziness or fatigue due to a vergence-accommodation conflict (VAC) of the pupil.

The effects obtainable in the present disclosure are not limited to the above effects, and other effects not mentioned may be clearly understood by one of ordinary skill in the art from the specification.

In order to solve the above-described technical problems, in an embodiment of the present disclosure, an electronic device for displaying hologram content is provided. The electronic device may include a spatial light modulator (SLM) configured to display a plurality of phase-modulated images. The electronic device may include an optical layer configured to receive a plurality of hologram images reproduced in the SLM. The electronic device may include memory in which at least one instruction is stored. The electronic device may include at least one processor including a processing circuit. As the at least one processor executes the at least one instruction stored in the memory individually or collectively, the electronic device may obtain a plurality of view images respectively corresponding to a plurality of views. The electronic device may generate the plurality of hologram images by using depth information for the obtained plurality of view images. The electronic device may calculate a plurality of diffraction angles for diffracting each of the generated plurality of hologram images from the optical layer toward each of the plurality of views. The electronic device may generate a plurality of phase delay patterns corresponding to the calculated plurality of diffraction angles. The electronic device may generate the plurality of phase-modulated images by multiplying the plurality of hologram images by the plurality of phase delay patterns respectively corresponding to the plurality of hologram images.

In an embodiment of the present disclosure, each of the plurality of phase delay patterns may include a plurality of grating patterns having the same period. A period of each of the plurality of grating patterns may be determined corresponding to each of the plurality of diffraction angles.

In an embodiment of the present disclosure, the electronic device may generate a final modulated image by adding all of the generated plurality of phase-modulated images. The electronic device may control the SLM to display the generated final modulated image.

In an embodiment of the present disclosure, the depth information may include a depth value for an object included in the obtained plurality of view images. When the depth value is equal to or greater than a preset maximum depth value, the electronic device may calculate a point spaced apart from the optical layer by a distance equal to a preset first reference distance as content position for displaying the hologram content. When the depth value is less than the maximum depth value, the electronic device may calculate a point spaced apart from the optical layer by a distance greater than the preset first reference distance as the content position.

In an embodiment of the present disclosure, as the depth value becomes smaller, the electronic device may calculate a point farther from the optical layer as the content position. When the depth value is equal to or less than a preset minimum depth value, the electronic device may calculate a point spaced apart from the optical layer by a distance equal to a preset second reference distance as the content position. The second reference distance may be a distance farther from the optical layer than the first reference distance.

In an embodiment of the present disclosure, the electronic device may generate the plurality of hologram images by performing inversion-optical propagation on each of the obtained plurality of view images by using the calculated content position.

In an embodiment of the present disclosure, the electronic device may generate the plurality of phase-modulated images by applying the plurality of view images, the content position, and the plurality of diffraction angles to a modulated image generation module. The modulated image generation module may include an AI model trained to infer the plurality of phase-modulated images for displaying the hologram content at the content position.

In an embodiment of the present disclosure, the trained AI model may generate a plurality of training hologram images based on a plurality of training view images obtained by capturing an object in a plurality of views. The trained AI model may generate a plurality of training phase delay patterns corresponding to a plurality of training diffraction angles. The trained AI model may generate a plurality of training phase-modulated images by multiplying the plurality of training hologram images by the plurality of training phase delay patterns. The trained AI model may be an AI model trained by using a loss function that compares training hologram content displayed by the plurality of training phase-modulated images with object content by the plurality of training view images.

In an embodiment of the present disclosure, the electronic device may include a coherent light source configured to provide coherent light to the SLM.

In an embodiment of the present disclosure, the optical layer may include a lens. The electronic device may calculate angles formed between an optical axis of the lens and a plurality of lines passing through the center of the lens and each of the plurality of views as the plurality of diffraction angles.

In order to solve the above-described technical problems, an embodiment of the present disclosure provides an operating method of an electronic device for displaying hologram content. The operating method of the electronic device may include obtaining a plurality of view images respectively corresponding to a plurality of views. The operating method of the electronic device may include generating a plurality of hologram images by using depth information for the obtained plurality of view images. The operating method of the electronic device may include calculating a plurality of diffraction angles for diffracting each of the plurality of hologram images from an optical layer, which receives the plurality of hologram images reproduced in a spatial light modulator (SLM), toward each of the plurality of views. The operating method of the electronic device may include generating a plurality of phase delay patterns corresponding to the calculated plurality of diffraction angles. The operating method of the electronic device may include generating a plurality of phase-modulated images by multiplying the plurality of hologram images by the plurality of phase delay patterns respectively corresponding to the plurality of hologram images. The operating method of the electronic device may include displaying the generated plurality of phase-modulated images through the SLM.

In an embodiment, each of the plurality of phase delay patterns may include a plurality of grating patterns having the same period. The period of each of the plurality of grating patterns may be determined corresponding to each of the plurality of diffraction angles.

In an embodiment of the present disclosure, the displaying of the generated plurality of phase-modulated images through the SLM may include generating a final modulated image by adding all of the generated plurality of phase-modulated images. The displaying of the generated plurality of phase-modulated images through the SLM may include displaying the final modulated image through the SLM.

In an embodiment of the present disclosure, the depth information may include a depth value for an object included in the obtained plurality of view images. The operating method of the electronic device may further include calculating a content position for displaying the hologram content based on the depth value. In the calculating of the content position, when the depth value is equal to or greater than a preset maximum depth value, a point spaced apart from the optical layer by a distance equal to a preset first reference distance may be calculated as the content position. In the calculating of the content position, when the depth value is less than the maximum depth value, a point spaced apart from the optical layer by a distance greater than the preset first reference distance may be calculated as the content position.

In an embodiment of the present disclosure, in the calculating of the content position, as the depth value is smaller, a point farther from the optical layer may be calculated as the content position. In the calculating of the content position, as the depth value is equal to or less than a preset minimum depth value, a point spaced apart from the optical layer by a distance equal to a preset second reference distance may be calculated as the content position. The second reference distance may be a distance farther from the optical layer than the first reference distance.

In an embodiment of the present disclosure, in the generating of the plurality of hologram images, the plurality of hologram images may be generated by performing inversion-optical propagation on each of the obtained plurality of view images by using the calculated content position.

In an embodiment of the present disclosure, the operating method of the electronic device may further include generating the plurality of phase-modulated images by applying the plurality of view images, the content position, and the plurality of diffraction angles to a modulated image generation module. The modulated image generation module may include an AI model trained to infer the plurality of phase-modulated images for displaying the hologram content at the content position.

In an embodiment of the present disclosure, a method of training the AI model may include generating a plurality of training hologram images based on a plurality of training view images obtained by capturing an object in a plurality of views. The method of training the AI model may include generating a plurality of training phase delay patterns corresponding to a plurality of training diffraction angles. The method of training the AI model may include generating a plurality of training phase-modulated images by multiplying the plurality of training hologram images by the plurality of training phase delay patterns. The method of training the AI model may include training the AI model based on a loss function that compares training hologram content displayed by the plurality of training phase-modulated images with object content by the plurality of training view images.

In an embodiment of the present disclosure, the operating method of the electronic device may include providing coherent light to the SLM through a coherent light source. In the calculating of the plurality of diffraction angles, angles formed between an optical axis of a lens and a plurality of lines passing through the center of the lens included in the optical layer and each of the plurality of views may be calculated as the plurality of diffraction angles.

In order to solve the above-described technical problems, there may be provided a computer-readable recording medium having recorded thereon a program for performing, on a computer, at least one of embodiments of the operating method of the electronic device disclosed in the present disclosure.

A program executed by the electronic device described in the present disclosure may be implemented as a hardware component, a software component, and/or a combination of a hardware component and a software component. The program may be executed by any system capable of executing computer-readable instructions.

Software may include a computer program, code, instructions, or a combination of one or more thereof, and may configure a processing device to operate as desired or instruct the processing device independently or collectively.

The software may be implemented as a computer program including instructions stored in a computer-readable storage medium. Examples of the computer-readable recording medium include a magnetic storage medium (e.g., a read-only memory (ROM), a random-access memory (RAM), a floppy disk, or a hard disk) and an optical recording medium (e.g., a compact disc ROM (CD-ROM) or a digital versatile disc (DVD)). The computer-readable recording medium may be distributed in computer systems connected in a network so that computer-readable code is stored and executed in a distributed fashion. The recording medium may be computer-readable, may be stored in a memory, and may be executed by a processor.

The computer-readable storage medium may be provided in the form of a non-transitory storage medium. Here, 'non-transitory' means that the storage medium does not include a signal (e.g., an electromagnetic wave) and is tangible, but does not distinguish whether data is stored semi-permanently or temporarily in the storage medium. For example, the "non-transitory storage medium" may include a buffer in which data is temporarily stored.

Also, a program according to embodiments of the present disclosure may be provided in a computer program product. The computer program product may be traded between a seller and a buyer as a product.

The computer program product may include a software program and a computer-readable storage medium in which the software program is stored. For example, the computer program product may include a product (e.g., a downloadable application) that is electronically distributed as a software program through an electronic market (e.g., Samsung Galaxy Store) or a manufacturer of an electronic device. For electronic distribution, at least a part of the software program may be stored in a storage medium or may be temporarily generated. In this case, the storage medium may be a storage medium of a server of the manufacturer of the electronic device, a server of the electronic market, or a relay server that temporarily stores the software program.

Although the embodiments have been described by the limited embodiments and the drawings as described above, various modifications and variations are possible by one of ordinary skill in the art from the above description. For example, the described techniques may be performed in a different order from the described method, and/or the described components such as a computer system and a module may be combined or integrated in a different form from the described method, or may be replaced or substituted by other components or equivalents to achieve appropriate results.

## Claims

1. An electronic device (100) for displaying hologram content (380), the electronic device (100) comprising:
a spatial light modulator (SLM) (112) configured to display a plurality of phase-modulated images;
an optical layer (113) configured to receive a plurality of hologram images (300, 310, and 320) reproduced in the SLM (112);
memory (120) in which at least one instruction is stored; and
at least one processor (130) comprising a processing circuit,
wherein the at least one processor individually or collectively executes the at least one instruction stored in the memory (120) to cause the electronic device (100) to
obtain a plurality of view images respectively corresponding to a plurality of views,
generate the plurality of hologram images (300, 310, and 320) by using depth information for the obtained plurality of view images,
calculate a plurality of diffraction angles for diffracting each of the generated plurality of hologram images (300, 310 and 320) from the optical layer (113) toward each of the plurality of views,
generate a plurality of phase delay patterns (330 and 340) corresponding to the calculated plurality of diffraction angles, and
generate the plurality of phase-modulated images by multiplying the plurality of hologram images (300, 310, and 320) by the plurality of phase delay patterns (330 and 340) respectively corresponding to the plurality of hologram images (300, 310, and 320).

2. The electronic device (100) of claim 1, wherein each of the plurality of phase delay patterns (330 and 340) comprises a plurality of grating patterns having a same period,
wherein the period of each of the plurality of grating patterns is determined corresponding to each of the plurality of diffraction angles.

3. The electronic device (100) of claim 1 or 2, wherein the electronic device (100)
generates a final modulated image by adding all of the generated plurality of phase-modulated images, and
controls the SLM (112) to display the generated final modulated image.

4. The electronic device (100) of any one of claims 1 to 3, wherein the depth information comprises a depth value for an object included in the obtained plurality of view images, wherein
based on the depth value being equal to or greater than a preset maximum depth value, the electronic device (100) calculates a point spaced apart from the optical layer (113) by a distance equal to a preset first reference distance as a content position for displaying the hologram content (380), and
based on the depth value being less than the maximum depth value, the electronic device (100) calculates a point spaced apart from the optical layer (113) by a distance greater than the preset first reference distance as the content position.

5. The electronic device (100) of claim 4, wherein
as the depth value becomes smaller, the electronic device (100) calculates a point farther from the optical layer (113) as the content position, and
based on the depth value being equal to or less than a preset minimum depth value, the electronic device (100) calculates a point spaced apart from the optical layer (113) by a distance equal to a preset second reference distance as the content position,
wherein the second reference distance is a distance farther from the optical layer (113) than the first reference distance.

6. The electronic device (100) of claim 4 or 5, wherein the electronic device (100) generates the plurality of hologram images (300, 310, and 320) by performing inversion-optical propagation on each of the obtained plurality of view images by using the calculated content position.

7. The electronic device (100) of any one of claims 4 to 6, wherein the electronic device (100) generates the plurality of phase-modulated images by applying the plurality of view images, the content position, and the plurality of diffraction angles to a modulated image generation module, wherein the modulated image generation module comprises an artificial intelligence (AI) model trained to infer the plurality of phase-modulated images for displaying the hologram content (380) at the content position.

8. The electronic device (100) of claim 7, wherein the trained AI model is an AI model trained to
generate a plurality of training hologram images based on a plurality of training view images obtained by capturing an object in a plurality of views, generate a plurality of training phase delay patterns corresponding to a plurality of training diffraction angles,
generate a plurality of training phase-modulated images by multiplying the plurality of training hologram images by the plurality of training phase delay patterns, and
use a loss function that compares training hologram content by the plurality of training phase-modulated images with object content by the plurality of training view images.

9. The electronic device (100) of any one of claims 1 to 8, further comprising a coherent light source configured to provide coherent light to the SLM (112).

10. The electronic device (100) of any one of claims 1 to 9, wherein the optical layer (113) comprises a lens,
wherein the electronic device (100) calculates angles formed between an optical axis of the lens and a plurality of lines passing through a center of the lens and each of the plurality of views as the plurality of diffraction angles.

11. An operating method of an electronic device (100) for displaying hologram content (380), the operating method of the electronic device (100) comprising:
obtaining a plurality of view images respectively corresponding to a plurality of views (S100);
generating a plurality of hologram images by using depth information for the obtained plurality of view images (S200);
calculating a plurality of diffraction angles for diffracting each of the plurality of hologram images from an optical layer, which receives the plurality of hologram images reproduced in a spatial light modulator (SLM), toward each of the plurality of views (S300);
generating a plurality of phase delay patterns corresponding to the calculated plurality of diffraction angles (S400);
generating a plurality of phase-modulated images by multiplying the plurality of hologram images by the plurality of phase delay patterns respectively corresponding to the plurality of hologram images (S500); and displaying the generated plurality of phase-modulated images through the SLM (S600).

12. The operating method of the electronic device (100) of claim 11, wherein each of the plurality of phase delay patterns comprises a plurality of grating patterns having a same period,
wherein the period of each of the plurality of grating patterns is determined corresponding to each of the plurality of diffraction angles.

13. The operating method of the electronic device (100) of claim 11 or 12, wherein the displaying of the generated plurality of phase-modulated images through the SLM (S600) comprises:
generating a final modulated image by adding all of the generated plurality of phase-modulated images (S610); and
displaying the final modulated image through the SLM (S620).

14. The operating method of the electronic device (100) of any one of claims 11 to 13, wherein the depth information comprises a depth value for an object included in the obtained plurality of view images,
wherein the operating method of the electronic device (100) further comprises calculating a content position for displaying the hologram content based on the depth value (S150),
wherein the calculating of the content position (S150) comprises,
based on the depth value being equal to or greater than a preset maximum depth value, calculating a point spaced apart from the optical layer by a distance equal to a preset first reference distance as the content position, and
based on the depth value being less than the maximum depth value, calculating a point spaced apart from the optical layer by a distance greater than the preset first reference distance as the content position.

15. A computer-readable recording medium having recorded thereon a program for performing, on a computer, the operating method of any one of claims 11 to 14.
